# EUROPÄISCHE PATENTSCHRIFT

(11) **EP 0 999 190 B1**
(45) Veröffentlichungstag und Bekanntmachung des Hinweises auf die Patenterteilung: **11.01.2006**
(21) Anmeldenummer: 99121710.0
(22) Anmeldetag: 02.11.1999
(51) Int. Cl.: C03B 37/014, C03B 19/14, C03C 3/06, C03C 13/04, C03C 25/62, C03C 25/00, C03C 25/60

(54) **Vorform für eine optische Faser, Verfahren zur Herstellung eines Kernglases einer Vorform für eine optische Faser und einer optischen Faser sowie Verwendung von synthetischem Quarzglases**
Optical fibre preform, processes for producing the core glass of and an optical fibre preform and for producing an optical fibre as well as the use of synthetic quartz glass
Préforme de fibre optique, procédés de fabrication du verre de coeur d'une préforme de fibre optique et d'une fibre optique et l'utilisation d'un verre de quartz synthétique

(30) Priorität: 04.11.1998 DE 19850736
(43) Veröffentlichungstag der Anmeldung: 10.05.2000
(73) Patentinhaber: Heraeus Tenevo GmbH, 63450 Hanau (DE)
(72) Erfinder: Vydra, Jan, 63456 Hanau (DE); Schötz, Gerhard, 63743 Aschaffenburg (DE)
(74) Vertreter: Staudt, Armin Walter

(56) Entgegenhaltungen:
- EP-A- 0 401 845
- EP-A- 0 483 477
- EP-A- 0 483 752
- EP-A- 0 622 340
- EP-A- 0 879 799
- WO-A-00/15570
- WO-A-98/40319
- PATENT ABSTRACTS OF JAPAN vol. 1999, no. 12, 29. Oktober 1999 (1999-10-29) -& JP 11 180731 A (ASAHI GLASS CO LTD), 6. Juli 1999 (1999-07-06)
- PATENT ABSTRACTS OF JAPAN vol. 12, no. 40, 5. Februar 1988 (1988-02-05) -& JP 62 191434 A (SUMITOMO ELECTRIC IND LTD), 21. August 1987 (1987-08-21)
- PATENT ABSTRACTS OF JAPAN vol. 16, no. 257, 11. Juni 1992 (1992-06-11) & JP 04 059630 A (SUMITOMO ELECTRIC IND LTD), 26. Februar 1992 (1992-02-26)

## Beschreibung

Die vorliegende Erfindung betrifft eine Vorform für eine optische Faser, insbesondere für eine optische Faser für die Übertragung von UV-Strahlung, mit einem Kernglas aus synthetischem Quarzglas, erhalten durch Flammenhydrolyse einer Siliziumverbindung, Abscheiden von feinkörnigem SiO₂ auf einem Substrat unter direktem Verglasen und Bildung des synthetischen Quarzglases, das von einem Mantelglas umhüllt ist.

Darüberhinaus betrifft die Erfindung ein Verfahren zur Herstellung eines Kerngtases einer Vorform für eine optische Faser, insbesondere für eine optische Faser für die Übertragung von UV-Strahlung, umfassend die Herstellung von synthetischem Quarzglas durch Flammenhydrolyse einer Siliziumverbindung, Abscheiden von feinkörnigem SiO₂ auf einem Substrat unter direktem Verglasen und Bildung des synthetischen Quarzglases.

Weiterhin betrifft die Erfindung ein Verfahren zur Herstellung einer optischen Faser, insbesondere einer optischen Faser für die Übertragung von UV-Strahlung, durch Ziehen aus einer Vorform, die ein Kernglas aus synthetischem Quarzglas umfaßt, das durch Flammenhydrolyse einer Siliziumverbindung, Abscheiden von feinkörnigem SiO₂ auf einem Substrat unter direktem Verglasen und Bildung des synthetischen Quarzglases gebildet wird.

Und außerdem betrifft die Erfindung eine Verwendung von synthetischem Quarzglas.

Vorformen für optische Fasern weisen im allgemeinen einen Kern auf, der von einem Mantel aus einem Material mit kleinerer Brechzahl umhüllt ist. Es sind auch Vorformen bekannt, die lediglich aus einem sogenannten Kemstab aus Kemmaterial bestehen, wobei der Mantel oder ein Teil des Mantels auf das Kemmaterial beim Ziehen der Faser aus der Vorform aufgebracht wird. Für die Herstellung von Vorformen für optische Fasern aus synthetischem Quarzglas haben sich im wesentlichen drei Verfahrensweisen durchgesetzt, die in der Fachliteratur als VA-D-Verfahren (vapor-phase axial deposition; axiale Abscheidung aus der Dampfphase), OVD-Verfahren (outside vapor-phase deposition; Außenabscheidung aus der Dampfphase), und MCVD-Verfahren (modified chemical vapor deposition; modifizierte Abscheidung aus der Dampfphase) bezeichnet werden. Darüberhinaus ist die Herstellung von Vorformen nach der sogenannten Stab-in-Rohr-Technik bekannt. Bei allen diesen Verfahrensweisen wird im allgemeinen ein Kernglas aus synthetischem Quarzglas durch Flammenhydrolyse einer siliziumhaltigen Verbindung hergestellt, indem SiO₂-Partikel erzeugt und auf einem Substrat abgeschieden und verglast werden. Bei dem Substrat kann es sich beispielsweise um ein Quarzglasrohr handeln, das aus einem Mantelglas besteht. Das Verglasen der SiO₂-Partikel kann direkt, während der Abscheidung auf dem Substrat erfolgen (im folgenden als "Direkt-Verglasung" bezeichnet), oder, wie beim sogenannten "Soot-Verfahren", in einem separaten Sinterprozeß. Beide Verglasungsvarianten führen zu einem dichten, transparenten, hochreinen Quarzglas.

Aufgrund ihrer Porosität lassen sich sogenannte Soot-Körper vor dem Verglasen einfach reinigen, dotieren oder anderweitig nachbehandeln. Andererseits hat direkt verglastes, synthetisches Quarzglas für einige Anwendungen im Zusammenhang mit der Übertragung kurzwelliger UV-Strahlung Vorteile. Bedingt durch die Gegenwart von Wasserstoff und Sauerstoff bei der Flammenhydrolyse enthält durch Direkt-Verglasung hergestelltes Quarzglas im allgemeinen einen relativ hohen OH-Gehalt und eine gewisse Konzentration an Wasserstoff.

Je nach Verfahrensweise wird das Mantelglas in einem separaten Verfahren hergestellt (OVD, MCVD, Plasmaverfahren, Stab-in-Rohr-Technik), oder das Mantelglas und das Kernglas werden gleichzeitig erzeugt, wie bei dem sogenannten VAD-Verfahren. Zur Veränderung der Brechzahl des Quarzglases wird üblicherweise ein Dotierstoff hinzugefügt, wie beispielsweise Germanium zur Brechzahlerhöhung, oder Fluor und Bor zum Emiedrigen der Brechzahl.

Bei der vorliegenden Erfindung wird von diesen hinlänglich bekannten Verfahrensweisen für die Herstellung einer Vorform ausgegangen, wobei das Kernglas der Vorform durch Direkt-Verglasung hergestellt wird. Durch Erhitzen und Langziehen der so hergestellten Vorform werden daraus optische Fasern erhalten.

Derartige optische Fasern werden nicht nur zur Übertragung von Information in Form optischer Signale in der Kommunikationstechnik eingesetzt, sondem zunehmend auch für die Übertragung energiereicher UV-Strahlung, wie beispielsweise in der Medizintechnik, bei der Materialbearbeitung, der UV-Spektroskopie, oder in Mikrolithographiegeräten für die Herstellung hochintegrierter Schaltungen in Halbleiterchips. Die Belichtungssysteme modemer Mikrolithographiegeräte sind mit Excimerlasem bestückt, die energiereiche, gepulste UV-Strahlung einer Wellenlänge von 248 nm (KrF-Laser) oder von 193 nm (ArF-Laser) abgeben. Es ist bekannt, daß derartige kurzwellige UV-Strahlung im Quarzglas der optischen Fasern strukturelle Defekte und damit einhergehend Absorptionen induzieren kann. Zum Beispiel bewirkt ein Sauerstoffüberschuß-Defekt, bei dem ein nicht brückenbildendes Sauerstoffatom vorliegt (ein sogenanntes NBOH-Zentrum), eine relativ breite Absorptionsbande bei einer Wellenlänge von etwa 265 nm. Einer Fehlstelle, bei der an einem Silizium-Atom nur drei Sauersoff Atome (anstelle von vier) gebunden sind, und die als E'-Zentrum bezeichnet wird, erzeugt eine Absorptionsbande um 215 nm. Einen Überblick über strukturelle Fehlstellen in Quarzglas gibt David L. Griscom in "Defect Structure of Glasses", J. Non-Cryst. Solids, 73 (1985), Seiten 55 - 77.

Der Einfluß der chemischen Zusammensetzung des Quarzglases auf das Schädigungsverhalten bei der Bestrahlung mit energiereichem UV-Licht ist beispielsweise in der EP-A1-401 845 beschrieben. Eine hohe Strahlenbeständigkeit wurde demnach bei hochreinem Quarzglas gefunden, das einen relativ hohen OH-Gehalt von 100 Gew.-ppm bis ca.1000 Gew.-ppm und gleichzeitig eine relativ hohe Wasserstoffkonzentration von mindestens 5x10¹⁶ Molekülen pro cm³ (bezogen auf das Volumen des Quarzglases) aufweist. Der günstige Einfluß des Wasserstoffes auf die Strahlenbeständigkeit läßt sich dadurch erklären, daß dieser zu einem Ausheilen von Defekten, und damit zu einem langsameren Anstieg der strahlungsinduzierten Absorption beitragen kann. Wegen dieser Wirkung von Wasserstoff wird in der EP-A1-401 845 empfohlen, optische Bauteile, an die hohe Anforderungen hinsichtlich der Strahlenbeständigkeit gestellt werden, mit Wasserstoff zu beladen.

In der EP-A1-590 199 wird ein gattungsgemäßes Kernglas für die Herstellung einer optischen Faser für die Übertragung von energiereichem UV-Licht, eine unter Verwendung des Kemglases hergestellte Vorform, ein Verfahren zur Herstellung des Kernglases, sowie ein gattungsgemäßes Verfahren zur Herstellung einer derartigen optischen Faser, beschrieben. Bei dem bekannten Kernglas handelt es sich um reines, synthetisches Quarzglas, das durch Flammenhydrolyse von Methyltrimethoxysilan erzeugt wird. Das Kernglas ist im wesentlichen frei von Chlor, sein Hydroxylgruppen-Gehalt (OH-Gehalt) liegt zwischen 10 und 1000 ppm, und es enthält Fluor in einer Konzentration im Bereich zwischen 50 und 5000 ppm. Zur Bildung einer Vorform für eine sogenannte Stufenindex-Faser wird ein Kernglas-Stab nach der "Stab-in-Rohr-Technik" mit einem Mantelglas-Rohr versehen, wobei das Mantelglas aus Fluor- oder Bordotiertem Quarzglas besteht. Aus der Vorform wird eine optische Faser gezogen, indem die Vorform auf ca. 2000 °C erhitzt, dabei von einem Ende beginnend erweicht, und aus dem erweichten Bereich die Faser gezogen wird. Die bekannte optische Faser zeigt im Vergleich zu anderen Fasern zwar eine gute Beständigkeit gegenüber energiereicher UV-Strahlung. Für Anwendungen, bei denen es auf eine besonders langsame Zunahme der strahlungsinduzierten Absorption, einen niedrigen Transmissionsverlust, und eine gute Langzeitstabilität ankommt, reicht die bekannte optische Faser jedoch nicht aus.

Der Erfindung liegt daher die Aufgabe zugrunde, eine Vorform bereitzustellen, aus der eine optische Faser gezogen werden kann, die gegenüber ultravioletter Strahlung einer Wellenlänge von 250 nm und kürzer eine im Vergleich zu bekannten Fasern höhere Strahlenbeständigkeit aufweist.

Weiterhin liegt der Erfindung die Aufgabe zugrunde, ein einfaches Verfahren zur Herstellung eines Kemglases für die Herstellung einer Vorform anzugeben, das durch Direkt-Verglasen erhalten wird, und das gegenüber ultravioletter Strahlung, insbesondere gegenüber energiereicher ultravioletter Strahlung einer Wellenlänge von 250 nm und kürzer, im Hinblick auf geringere Absorption, langsamere Zunahme der Absorption und höhere Langzeitstabilität optimiert ist.

Weitere Aufgaben der Erfindung bestehen darin, eine optischen Faser mit optimierter Strahlenbeständigkeit gegenüber ultravioletter Strahlung und eine besondere Verwendung von synthetischem Quarzglas anzugeben.

Hinsichtlich der Vorform für eine optische Faser wird die oben genannte Aufgabe ausgehend von der eingangs beschriebenen Vorform erfindungsgemäß dadurch gelöst, daß das Kernglas einen Wasserstoffgehalt von weniger als 1x10¹⁸ Molekülen/cm³ aufweist.

Aus der Vorform wird eine optische Faser gezogen. Beim Faserziehen wird die Vorform erhitzt und dabei plastisch verformt. Es hat sich gezeigt, daß durch diese Heißverformung der Vorform in Quarzglas sogenannte Precursor-Defekte (Vorläufer-Defekte) erzeugt werden, aus denen durch Bestrahlung mit kurzwelliger UV-Strahlung andere strukturelle Defekte entstehen können. Als Precursor-Defekt kommt beispielsweise eine Bindung zwischen Silizium und Wasserstoff in Frage (im folgenden als Si-H-Bindung bezeichnet). Diese Si-H-Bindungen treten in der Faser vermehrt auf, wenn das Kernglas der Vorform aus Quarzglas mit einem Wasserstoffgehalt von mehr als 1x10¹⁸ Molekülen/cm³ besteht. Dies kann damit erklärt werden, daß durch die hohen Temperaturen beim Faserziehen und durch die starke plastische Verformung des Quarzglases strukturelle Fehlstellen, beispielsweise freie Bindungen von Silizium entstehen, die durch den vorhandenen Wasserstoff unter Bildung von Si-H-Bindungen abgesättigt werden. Der Mechanismus läßt sich schematisch anhand folgender Formel darstellen:

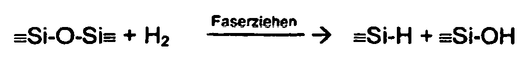

Die Absättigung freier, beim Faserziehen entstehender Bindungen durch vorhandenen Wasserstoff führt zu einer hohen Precursor-Konzentration (Si-H-Bindungen) im Faserkern. In der Publikation von J.E. Shelby, "Molecular diffusion and solubility of hydrogen isotopes in vitreous silica", J. Appl. Physics Vol. 48 (1977), No. 8, Seite 3387 ff, ist beschrieben, daß sich in wasserstoffhaltigem Quarzglas bei hohen Temperaturen Si-H-Bindungen bilden können. Si-H-Bindungen absorbieren zwar im relevanten UV-Wellenlängenbereich selbst nicht; die Bindungen sind jedoch relativ schwach und können bei anschließender Bestrahlung mit kurzwelligem UV-Licht leicht (in einem sogenannten "Ein-Photonen-Prozeß") unter Bildung absorbierender E'-Zentren aufbrechen. Dieser Vorgang ist in "Comparison of the influence of the fictive and the annealing temperature on the UV-transmission properties of synthetic fused silica" von V. Uhl et al. in Appl. Phys. A, 65 (1997), Seiten 457 - 462, näher beschrieben. Da E'-Zentren im UV-Wellenlängenbereich absorbieren, wirkt sich dieser Umwandlungsmechanismus auf die Strahlenbeständigkeit der optischen Faser negativ aus.

≡ Si-H + hν → Si* + H (E'- Zentrum)

Diesen Nachteil zeigt eine optische Faser, die aus einer erfindungsgemäßen Vorform gezogen worden ist, jedoch nicht. Der Wasserstoffgehalt des Kernglases der Vorform wird vor der Heißverformung beim Faserziehen auf einen Wert unterhalb von 1x10¹⁸ Molekülen/cm³ eingestellt. Es zeigte sich, daß in diesem Fall die Precursor-Konzentration im Faserkern nach dem Faserziehen deutlich niedriger ist. Offensichtlich wird aufgrund des geringen Wasserstoffgehaltes die Bildung von Si-H-Bindungen beim Faserziehen unterdrückt. Das Schädigungsverhalten einer derartigen optischen Faser gegenüber energiereicher UV-Strahlung, ist durch einen deutlich langsameren anfänglichen Anstieg der induzierten Absorption gekennzeichnet. Dies kann auf die geringe Precursor-Konzentration im Faserkern zurückgeführt werden.

Das Kernglas der erfindungsgemäßen Vorform wird durch "Direkt-Verglasung" hergestellt. Fasern aus Vorformen, deren Kerngläser nach dem "Soot-Verfahren" oder durch "PlasmaVerfahren" hergestellt wurden, zeigten im UV-Wellenlängenbereich um 265 nm eine sogenannte "Ziehbande", die auch dann auftrat, wenn das Kernglas ansonsten dem oben beschriebenen Kernglas gemäß der Erfindung entsprach. Dies könnte mit den spezifischen Herstellungsbedingungen zusammenhängen.

Der Wasserstoffgehalt wird aufgrund einer Raman-Messung ermittelt, die von Khotimchenko et al., "Determining the Content of Hydrogen Dissolved in Quartz Glass Using the Methods of Raman Scattering and Mass Spectrometry" in "Zhumal Prikladnoi Spektroskopii", Vol 46, No. 6, (1987), Seiten 987 bis 991 beschrieben worden ist. Die Maßeinheit "Moleküle/cm³" bezieht sich auf die Anzahl von Wasserstoffmolekülen pro cm³ Quarzglas. Optimal wäre es, wenn der Wasserstoffgehalt über den gesamten radialen Querschnitt eines zylinderförmigen Kemglases unterhalb der angegeben Konzentration liegen würde. Häufig ist der Wasserstoffgehalt über den radialen Querschnittt des Kemglases jedoch nicht homogen verteilt. Je nach Herstellungsbedingungen können sich Maxima der Wasserstoffkonzentration im Randbereich oder im zentralen Bereich des Kemglases einstellen. Unter Umständen können derartige Maxima, insbesondere in den Randbereichen oberhalb von 10¹⁸ Molekülen/cm³ liegen und dennoch unschädlich sein. Es wird angenommen, daß für die Eignung eines Kemglases im Sinne dieser Erfindung die Wasserstoffkonzentration in seinem zentralen Bereich entscheidend ist. Daher wird unter dem Wasserstoffgehalt im Sinne der vorliegenden Erfindung die Wasserstoff- und/oder Deuteriumkonzentration verstanden, die sich aufgrund einer Raman-Messung in der Mitte des radialen Kemglas-Querschnitts ergibt, wobei der Durchmesser des Meßstrahls weniger als 1 mm beträgt. Die Nachweisgrenze für den Wasserstoffgehalt liegt bei dieser Meßmethode derzeit bei ca. 2x10¹⁶ Molekülen/cm³ bei üblichen Meßzeiten. Bei sehr langen Integrationszeiten (beispielsweise 24 Stunden oder länger) kann die Meßgenauigkeit auf ca. 2x10¹⁵ Moleküle/cm³ erhöht werden.

Ein besonders günstiges Schädigungsverhalten zeigt eine optische Faser, die aus einer Vorform gezogen wird, bei der das Kernglas aus Quarzglas besteht, das einen Wasserstoffgehalt von maximal 1x10¹⁷ Molekülen/ cm³ aufweist.

Als vorteilhaft hat es sich erwiesen, daß das Quarzglas einen Gehalt an Hydroxylgruppen von mindestens 100 Gew.-ppm aufweist. Der Gehalt an Hydroxylgruppen verbessert die Strahlenbeständigkeit der Vorform bzw. einer daraus gezogenen Faser.

Der Gehalt an Hydroxylgruppen im Sinne dieser Erfindung wird ähnlich dem Wasserstoffgehalt im zentralen Bereich des Kemglases gemessen, wobei jedoch der OH-Gehalt spektroskopisch ermittelt wird.

Bei einer besonders bevorzugten Vorform weist das Quarzglas des Kemglases einen Wasserstoffgehalt von mindestens 2x10¹⁵ Molekülen/ cm³ auf. Aus einer Vorform mit einem Kernglas, bei dem der Wasserstoffgehalt unterhalb dieses Wertes eingestellt ist, wird eine optische Faser erhalten, die bei ca. 265 nm eine Absorptionsbande aufweist, die sich unter UV-Bestrahlung noch stärker ausprägt. Diese Absorptionsbande deutet auf NBOH-Zentren hin. Daraus ist zu schließen, daß der Wasserstoffgehalt des Quarzglases im Hinblick auf das Schädigungsverhalten gegenüber UV-Strahlung ein Optimum aufweist, das zwischen 1x10¹⁸ Molekülen/cm³ und 2x10¹⁵ Molekülen/cm³, vorzugsweise zwischen 1x10¹⁷ Molekülen/cm³ und 2x10¹⁵ Molekülen/cm³ liegt. Eine mögliche Erklärung dafür ist, daß es eines gewissen Gehaltes an Wasserstoff im Kernglas der Vorform bedarf, um beim Faserziehen die Ausbildung von NBOH-Zentren und/oder Vorläufer-Defekten für NBOH-Zentren zu vermeiden. Das beschriebene Schädigungsverhalten der Faser macht sich lediglich bei einer Übertragung von UV-Strahlung einer Wellenlänge ungünstig bemerkbar, die im Bereich der Absorptionsbande liegt (beispielsweise 248 nm, jedoch nicht bei 193 nm). Im übrigen kann dieser nachteilige Effekt eines geringen Wasserstoffgehaltes durch eine zusätzliche Maßnahme kompensiert werden, wie dies weiter unten im Zusammenhang mit einem Verfahren zur Herstellung einer optischen Faser noch näher erläutert wird.

Für den Fall, daß die Vorform einen Mantel aus synthetischem Quarzglas umfaßt, weist auch dieses vorteilhafterweise einen Wasserstoffgehalt von weniger als 1x10¹⁸ Molekülen/cm³, vorzugsweise von weniger als 1x10¹⁷ Molekülen/ cm³ auf. Dadurch wird die Gefahr einer Eindiffusion von Wasserstoff beim Faserziehen vom Mantel in das Kernglas verringert.

Hinsichtlich des Verfahrens zur Herstellung eines Kernglases einer Vorform für eine optische Faser wird die oben angegebene Aufgabe ausgehend von dem eingangs beschriebenen Verfahren erfindungsgemäß dadurch gelöst, daß der Wasserstoffgehalt des Quarzglases auf einen Wert unterhalb von 1x10¹⁸ Molekülen/ cm³ eingestellt wird.

Bedingt durch Gegenwart von Wasserstoff beim Herstellungsverfahren des Kemglases enthält dieses nach dem Verglasen Wasserstoff. Für den Fall, daß die Wasserstoff-Konzentration oberhalb der oben genannten Maximalgrenze von 1x10¹⁸ Molekülen/ cm³ liegt, ist es erforderlich, den Wasserstoff aus dem Kernglas auszutreiben.

Beim erfindungsgemäßen Verfahren wird der Wasserstoffgehalt des Kemglases auf einen Wert unterhalb von 1x10¹⁸ Molekülen/cm³ eingestellt, bevor aus der Vorform eine Faser gezogen wird. Zur Einstellung des Wasserstoffgehaltes kann das Kernglas einem separaten Behandlungsschritt unterworfen werden; die Einstellung kann aber auch in Verbindung mit einem Verfahrensschritt im Verlaufe der Herstellung der Vorform erfolgen (beispielsweise bei der Herstellung des Mantelglases nach dem OVD-Verfahren), wobei üblicherweise der Wasserstoffgehalt der gesamten Vorform (Kernglas + Mantelglas) beeinflußt wird.

Hinsichtlich der Wirkungen des einzustellenden Waserstoffgehaltes auf das Schädigungsverhalten einer optischen Faser, die aus einer unter Verwendung des Kernglases hergestellten Vorform gezogen wird, wird auf die obigen Erläuterungen zur erfindungsgemäßen Vorform verwiesen. Ein wesentlicher Gedanke der Erfindung besteht darin, die Konzentration an Si-H-Bindungen im Faserkern möglichst gering zu halten, da diese als Precursor-Defekte wirken können und das Schädigungsverhalten der Faser gegenüber UV-Strahlung beeinträchtigen.

Als besonders vorteilhaft hat sich ein Verfahren erwiesen, bei dem der Wasserstoffgehalt des Quarzglases auf einen Wert unterhalb von 1x10¹⁷ Molekülen/cm³ eingestellt wird. Eine optische Faser, die aus einer so hergestellten Vorform erhalten wird, zeichnet sich durch eine besonders gute Langzeitstabilität gegenüber energiereicher UV-Strahlung und ein besonders niedriges Niveau von durch UV-Strahlung induzierter Absorption aus.

In dieser Hinsicht hat sich auch ein Verfahren bewährt, bei dem der Hydroxylgruppen-Gehalt des Quarzglases auf mindestens 100 Gew.-ppm eingestellt wird. Hydroxylgruppen verbessern die Strahlenbeständigkeit des Kemglases. Herstellungsbedingt ist für die Einstellung des Hydroxylgruppen-Gehalts ein separater Behandlungsschritt meist nicht erforderüch, da er sich üblicherweise oberhalb der genannten Untergrenze im Verlaufe der Herstellung des Kemglases ergibt. Der Gehalt an Hydroxylgruppen wird ähnlich dem Wasserstoffgehalt im zentralen Bereich des Kemglases gemessen, wobei jedoch der Hydroxylgruppen-Gehalt spektroskopisch ermittelt wird.

In einer bevorzugten Verfahrensvariante wird der Wasserstoffgehalt des Quarzglases auf einen Wert von mindestens 2x10¹⁵ Molekülen/cm³ eingestellt. Aus einer Vorform mit einem Kernglas, bei dem der Wasserstoffgehalt unterhalb dieses Wertes eingestellt ist, wird eine optische Faser erhalten, die ein ungünstiges Schädigungsverhalten zeigen kann. Auf die obigen Erläuterungen im Zusammenhang mit der erfindungsgemäßen Vorform wird verwiesen.

Im Hinblick auf das Schädigungsverhalten gegenüber UV-Strahlung weist der Wasserstoffgehalt des Quarzglases ein Optimum auf, das zwischen 1x10¹⁸ Molekülen/cm³ und 2x10¹⁵ Molekülen/cm³, vorzugsweise zwischen 1x10¹⁷ Molekülen/cm³ und 2x10¹⁵ Molekülen/cm³ liegt. Bei einem Kernglas mit einem Wasserstoffgehalt unterhalb der angegebenen Untergrenze, ist daher vor dem Faserziehprozeß eine Anreicherung mit Wasserstoff vorteilhaft. Die Anreicherung des Kemglases mit Wasserstoff kann in einem separaten Behandlungsschritt erfolgen, oder an der kompletten Vorform, oder in Verbindung mit einem Verfahrensschritt zur Herstellung der Vorform.

Eine mögliche Erklärung für den beobachteten Effekt ist, daß es eiries gewissen Gehaltes an Wasserstoff im Kernglas der Vorform bedarf, um beim Faserziehen die Ausbildung von NBOH-Zentren und/oder Vortäufer-Defekten für NBOH-Zentren zu vermeiden. NBOH-Zentren erzeugen eine breite Absorptionsbande bei einer Wellenlänge von ca. 265 nm. Sie machen sich daher besonders bei einer Übertragung von UV-Strahlung einer Wellenlänge, die im Bereich diese Absorptionsbande liegt ungünstig bemerkbar, jedoch weniger bei Übertragung von UV-Strahlung einer Wellenlänge unterhalb von 200 nm. Im übrigen kann dieser nachteilige, durch einen zu niedrigen Wasserstoffgehalt des Kemglases bewirkte Effekt, durch eine zusätzliche Maßnahme kompensiert werden, wie dies weiter unten im Zusammenhang mit einem Verfahren zur Herstellung einer optischen Faser noch näher erläutert wird.

In einer bevorzugten Verfahrensweise wird ein wasserstoffhaltiges Quarzglas erzeugt, wobei das Einstellen des Wasserstoffgehaltes eine Wasserstoff-Reduktionsbehandlung umfaßt, der das wasserstoffhaltiges Quarzglas unter Bildung des synthetischen Quarzglases unterzogen wird. Bedingt durch die Gegenwart von Wasserstoff bei der Herstellung durch Flammenhydrolyse, enthält das Quarzglas nach dem Verglasen Wasserstoff. Es ist daher im allgemeinen erforderlich, den Wasserstoff aus dem Quarzglas auszutreiben. Mittels der Wasserstoff-Reduktionsbehandlung läßt sich der Wasserstoff-Gehalt ausgehend von einer ersten, hohen Konzentration, reproduzierbar auf eine zweite Konzentration einstellen. Die so hergestellten Vorformen liefern daher optische Fasern mit einem definierten Schädigungsverhalten.

Das Quarzglas wird der Wasserstoff-Reduktionsbehandlung üblicherweise in einem separaten Verfahrensschritt unterzogen. Die Wasserstoff-Reduktionsbehandlung kann aber auch an der kompletten Vorform (Kemglas + Mantelglas) vorgenommen werden, oder in Verbindung mit einem Verfahrensschritt zur Herstellung der Vorform erfolgen, beispielsweise im Rahmen einer Abscheidung von Mantelglas auf dem Kernglas.

Das Einstellen des Wasserstoffgehalts umfaßt vorteilhafterweise eine thermische Behandlung des Quarzglases, eine Behandlung unter Vakuum, und/oder eine Behandlung in einer chemisch reaktiven Atmosphäre. Die genannten Behandlungsvarianten können alternativ oder kumulativ angewandt werden. Als besonders wirksam erweist sich jedoch eine thermische Behandlung (im folgenden als "Tempem" bezeichnet). Das Tempem erfolgt in einer Wasserstoff-freien Atmosphäre, zum Beispiel unter Inertgas oder im Vakuum, um den Wasserstoffgehalt des Quarzglases zu verringern, oder in einer wasserstoff-hattigen Atmosphäre unter Normaldruck oder Überdruck, um den Wasserstoffgehalt des Quarzglases zu erhöhen. Durch die Temperaturerhöhung beim Tempem diffundiert Wasserstoff in Quarzglas schneller. Beim Austreiben von Wasserstoff verarmen zuerst die oberflächennahen Bereiche und erst später die zentralen Bereiche des Kernglases an Wasserstoff. Es ist deshalb darauf zu achten, daß der Wasserstoffgehalt insbesondere in demjenigen Bereich ausreichend entfernt wird, der beim bestimmungsgemäßen Einsatz der aus dem Kernglas hergestellten Faser am stärksten optisch belastet wird; das sind im allgemeinen gerade die zentralen Bereiche der Faser. Andererseits kann sich durch Tempem des Kemglases ein Wasserstoffgehalt unterhalb des oben genannten Mindestgehaltes von 2x10¹⁵ Molekülen/cm³ einstellen, was sich als nachteilig erweisen kann.

Das Tempern von Quarzglas für optische Bauteile ist ein häufig angewandter Behandlungsschritt, der üblicherweise zum Abbau mechanischer Spannungen dient, die die optischen Eigenschaften des Glases beeinträchtigen. In Zielsetzung, Durchführung und im Ergebnis unterscheidet sich das hier zum Einstellen des Wasserstoffgehaltes vorgeschlagene Tempern des Kemglases von den bekannten Temperverfahren. So wird das Kernglas bevorzugt bei einer Temperatur von mindestens 600°C getempert, wobei sich die Temperdauer anhand der Dicke des Kemglases und dem einzustellenden Wasserstoffgehalt ergibt. Letzterer beträgt erfindungsgemäß weniger als 1x10¹⁸ Moleküle/cm³, bevorzugt höchstens 1x10¹⁷ Moleküle/cm³ und mindestens 2x10¹⁵ Moleküle/cm³.

Hinsichtlich des Verfahrens zur Herstellung einer optischen Faser wird die oben angegebene Aufgabe ausgehend von dem eingangs erwähnten Ziehverfahren erfindungsgemäß dadurch gelöst, daß das Kernglas vor dem Ziehen auf einen Wasserstoffgehalt von weniger als 1x10¹⁸ Molekülen/cm³ eingestellt wird.

Bedingt durch Gegenwart von Wasserstoff beim Herstellungsverfahren des Kernglases, kann dieses nach dem Verglasen Wasserstoff enthalten. Für den Fall, daß die Wasserstoff-Konzentration oberhalb der oben genannten Maximalgrenze von 1x10¹⁸ Molekülen/cm³ liegt, ist es erforderlich, den Wasserstoff aus dem Kernglas auszutreiben. Beim erfindungsgemäßen Verfahren wird der Wasserstoffgehalt des Kemglases auf einen Wert unterhalb von 1x10¹⁸ Molekülen/cm³ eingestellt, bevor aus der Vorform eine Faser gezogen wird. Zur Einstellung des Wasserstoffgehaltes kann das Kernglas einem separaten Behandlungsschritt unterworfen werden; die Einstellung kann aber auch in Verbindung mit einem Verfahrensschritt im Verlaufe der Herstellung der Vorform erfolgen, wobei üblicherweise der Wasserstoffgehalt der gesamten Vorform (Kemglas + Mantelglas) beeinflußt wird.

Hinsichtlich der Wirkungen des einzustellenden Waserstoffgehaltes auf das Schädigungsverhalten einer optischen Faser, die aus einer unter Verwendung des Kemglases hergestellten Vorform gezogen wird, wird auf die obigen Erläuterungen zur erfindungsgemäßen Vorform verwiesen.

Als besonders vorteilhaft hat sich ein Verfahren erwiesen, bei dem der Wasserstoffgehalt des Kemglases vor dem Ziehen der optischen Faser auf einen Wert unterhalb von 1x10¹⁷ Molekülen/cm³ eingestellt wird. Eine so hergestellte optische Faser zeichnet sich durch eine besonders gute Langzeitstabilität gegenüber energiereicher UV-Strahlung und ein besonders niedriges Niveau von durch UV-Strahlung induzierter Absorption aus.

In dieser Hinsicht hat sich auch ein Verfahren bewährt, bei dem der Hydroxylgruppen-Gehalt des Kemglases vor dem Ziehen auf mindestens 100 Gew.-ppm eingestellt wird. Hydroxylgruppen verbessern die Strahlenbeständigkeit des Kemglases. Herstellungsbedingt ist für die Einstellung des Hydroxylgruppen-Gehaltes ein separater Behandlungsschritt meist nicht erforderlich, da er sich üblicherweise oberhalb der genannten Untergrenze im Verlaufe der Herstellung des Kemglases ergibt. Der Gehalt an Hydroxylgruppen wird ähnlich dem Wasserstoffgehalt im zentralen Bereich des Kemglases gemessen, wobei jedoch der Hydroxylgruppen-Gehalt spektroskopisch ermittelt wird.

In einer bevorzugten Verfahrensvariante wird der Wasserstoffgehalt des Kernglases vor dem Ziehen der Faser auf einen Wert von mindestens 2x10¹⁵ Molekülen/cm³ eingestellt. Aus einer Vorform mit einem Kernglas, bei dem der Wasserstoffgehalt unterhalb dieses Wertes eingestellt ist, wird eine optische Faser erhalten, die ein ungünstiges Schädigungsverhalten zeigen kann. Auf die obigen Erläuterungen im Zusammenhang mit der erfindungsgemäßen Vorform wird verwiesen.

Im Hinblick auf das Schädigungsverhalten gegenüber UV-Strahlung wird der Wasserstoffgehalt des Kemglases vor dem Ziehen auf ein Optimum eingestellt, das zwischen 1x10¹⁸ Molekülen/cm³ und 2x10¹⁵ Molekülen/cm³, vorzugsweise zwischen 1x10¹⁷ Molekülen/cm³ und 2x10¹⁵ Molekülen/cm³ liegt. Bei einem Kernglas mit einem Wasserstoffgehalt unterhalb der angegebenen Untergrenze, ist daher vor dem Faserziehprozeß eine Anreicherung mit Wasserstoff vorteilhaft. Die Anreicherung des Kernglases mit Wasserstoff kann in einem separaten Behandlungsschritt erfolgen, oder an der kompletten Vorform, oder in Verbindung mit einem Verfahrensschritt zur Herstellung der Vorform.

Es zeigt sich, daß auch ein zu niedriger Wasserstoffgehalt des Kemglases vor dem Ziehen der Faser das Schädigungsverhaltens der Faser beeinträchtigen kann. Eine mögliche Erklärung für diesen Effekt ist, daß es eines gewissen Gehaltes an Wasserstoff im Kernglas der Vorform bedarf, um beim Faserziehen die Ausbildung von NBOH-Zentren und/oder Vorläufer-Defekten für NBOH-Zentren zu vermeiden. NBOH-Zentren erzeugen eine breite Absorptionsbande bei einer Wellenlänge von ca. 265 nm. Sie machen sich daher besonders bei einer Übertragung von UV-Strahtung einer Wellenlänge, die im Bereich diese Absorptionsbande liegt ungünstig bemerkbar, jedoch weniger bei Übertragung von UV-Strahlung einer Wellenlänge unterhalb von 200 nm. Dieser nachteilige Effekt kann durch eine zusätzliche Maßnahme kompensiert werden, die weiter unten noch näher erläutert wird.

Besonders wirkungsvoll gestaltet sich eine Verfahrensweise, bei der ein wasserstoffhaltiges Quarzglas erzeugt wird, wobei das Einstellen des Wasserstoffgehattes eine Wasserstoff-Reduktionsbehandlung umfaßt, der das wasserstoffhaltiges Quarzglas unter Bildung des Kemglases unterzogen wird. Bedingt durch die Gegenwart von Wasserstoff bei diesem Herstellungsverfahren, enthält das Kernglas nach dem Verglasen Wasserstoff. Es kann daher erforderlich sein, den Wasserstoff aus dem Kernglas auszutreiben. Mittels der Wasserstoff-Reduktionsbehandlung läßt sich der Wasserstoff-Gehalt vor dem Ziehen der Faser ausgehend von einer ersten, hohen Konzentration, reproduzierbar auf eine zweite, niedrigere Konzentration einstellen. Die so hergestellten Vorformen liefern daher optische Fasern mit definiertem Schädigungsverhalten.

Das Kernglas wird der Wasserstoff-Reduktionsbehandlung üblicherweise in einem separaten Verfahrensschritt unterzogen. Die Wasserstoff-Reduktionsbehandlung kann aber auch an der kompletten Vorform (Kernglas + Mantelglas) vorgenommen werden, oder in Verbindung mit einem Verfahrensschritt zur Herstellung der Vorform erfolgen. Dabei wird beispielsweise Wasserstoff gleichzeitig aus dem Kernglas und aus dem Mantelglas ausgetrieben, und dadurch die schädliche Wirkung dieses Wasserstoffs beim nachfolgenden Faserziehen verringert.

Das Einstellen des Wasserstoffgehalts umfaßt vorteilhafterweise eine thermische Behandlung des Kemglases, eine Behandlung unter Vakuum, und/oder eine Behandlung in einer chemisch reaktiven Atmosphäre. Die genannten Behandlungsvarianten können alternativ oder kumulativ angewandt werden. Als besonders wirksam erweist sich jedoch eine thermische Behandlung (im folgenden als "Tempern" bezeichnet). Das Tempern erfolgt in einer wasserstoff-freien Atmosphäre, zum Beispiel unter Inertgas oder im Vakuum, um den Wasserstoffgehalt des Kernglases zu verringern, und in einer wasserstoff-haltigen Atmosphäre unter Normaldruck oder Überdruck, um den Wasserstoffgehalt des Kernglases zu erhöhen. Durch die Temperaturerhöhung beim Tempern diffundiert Wasserstoff in Quarzglas besonders schnell. Beim Austreiben von Wasserstoff verarmen zuerst die oberflächennahen Bereiche und erst später die zentralen Bereiche des Kemglases an Wasserstoff. Es ist deshalb darauf zu achten, daß der Wasserstoffgehalt insbesondere in demjenigen Bereich ausreichend entfernt wird, der beim bestimmungsgemäßen Einsatz der aus dem Kernglas hergestellten Faser am stärksten optisch belastet wird; das sind im allgemeinen gerade die zentralen Bereiche der Faser. Andererseits ist darauf zu achten, daß sich nicht durch zu starkes Tempem des Kemglases ein Wasserstoffgehalt unterhalb der oben genannte Untergrenze von 2x10¹⁵ Molekülen/cm³ einstellt, da dies sich ebenfalls als nachteilig erweisen kann.

Als besonders vorteilhaft hat es sich erwiesen, die Faser nach dem Ziehen aus der Vorform mit Wasserstoff zu beladen. Die Wasserstoffbeladung wirkt sich auf das Schädigungsverhalten der optischen Faser positiv aus, und zwar unabhängig davon, ob die Faser aus einer erfindungsgemäßen Vorform gezogen worden ist, oder nicht. Bei einer erfindungsgemäß hergestellten optischen Faser führt die Beladung mit Wasserstoff aber zu einer besonders deutlichen Verbesserung des Schädigungsverhalten gegenüber UV-Strahlung. Aufgrund der hohen Konzentration von Precursor-Zentren in den wasserstoffbeladenen Fasern gemäß dem Stand der Technik werden diese zu Beginn der UV-Bestrahlung schnell in absorbierende Defektzentren (E'- und NBOH-Zentren) umgewandelt, was zu einer schnellen anfänglichen Schädigung führt. In erfindungsgemäßen, wasserstoffbeladenen Fasern dahingegen werden aufgrund der geringen Precursor-Konzentration zu Beginn der UV-Bestrahlung nur wenige UV-absorbiemede Defektzentren gebildet, die effektiv durch den molekular vorhandenen Wasserstoff abgesättigt werden können. Diese Absättigung kann folgendermaßen dargestellt werden:

≡Si* + 1/2 H₂ → ≡Si-H

≡Si-O* + 1/2 H₂ → ≡Si-OH

Dies gilt insbesondere auch für solche Fasern, die aus einer Vorform mit einem Kernglas gezogen worden sind, das vor dem Ziehen einen Wasserstoffgehalt aufwies, der unterhalb eines - im Hinblick auf das Schädigungsverhalten - optimalen Wasserstoffgehaltes liegt. Wie weiter oben bereits erwähnt, ist der optimale Wasserstoffgehalt des Kemglases zwischen 1x10¹⁸ Molekülen/cm³ und 2x10¹⁵ Molekülen/cm³, vorzugsweise zwischen 1x10¹⁷ Molekülen/ cm³ und 2x10¹⁵ Molekülen/cm³ anzunehmen. Bei einem Wasserstoffgehalt unterhalb dieses Optimums bilden sich beim Faserziehen offensichtlich vermehrt NBOH-Zentren und Vorläufer-Defekte für NBOH-Zentren, die eine breite Absorptionsbande bei einer Wellenlänge von ca. 265 nm erzeugen, die durch UV-Bestrahlung noch verstärkt wird. Überraschenderweise kann dieser nachteilige Effekt durch eine nachträgliche Beladung der Faser mit Wasserstoff vollständig oder nahezu vollständig beseitigt werden. Dies läßt sich dadurch erklären, daß der Bereich um das Optimum des Wasserstoffgehalt des Kernglases, wie es oben erläutert ist, durch die nachträgliche Wasserstoffbeladung der Faser in Richtung niedrigerer Wasserstoffgehalte erweitert wird.

Bevorzugt wird daher die Faser mit einem Faserkern ausgebildet, wobei mindestens im Faserkern durch die Wasserstoff-Beladung ein Wasserstoffgehalt von mindestens 1x10¹⁸ Moleküle/cm³ eingestellt wird.

Hinsichtlich der Verwendung von synthetischem, durch Flammenhydrolyse einer Siliziumverbindung, Abscheiden von feinkörnigem SiO₂ auf einem Substrat unter direktem Verglasen gebildeten Quarzglas mit einem Wasserstoffgehalt von weniger als 1x10¹⁸ Molekülen/cm³ wird die oben genannte Aufgabe erfindungsgemäß gelöst, indem das Quarzglas als Kernglas für die Herstellung einer Vorform für eine optische Faser für die Übertragung von UV-Strahlung.

Das Quarzglas wird als Kernglas zur Herstellung einer Vorform eingesetzt, aus der optische Fasern gezogen werden. Beim Faserziehen wird die Vorform erhitzt und dabei plastisch verformt. Es hat sich gezeigt, daß durch diese Heißverformung der Vorform in Quarzglas sogenannte Precursor-Defekte (Vorläufer-Defekte) erzeugt werden, aus denen durch Bestrahlung mit kurzwelliger UV-Strahlung andere strukturelle Defekte entstehen können. Als Precursor-Defekt kommt beispielsweise eine Bindung zwischen Silizium und Wasserstoff in Frage (im folgenden als Si-H-Bindung bezeichnet). Diese Si-H-Bindungen treten in der Faser vermehrt auf, wenn das Kernglas der Vorform aus Quarzglas mit einem Wasserstoffgehalt von mehr als 1x10¹⁸ Moleküle/cm³ besteht. Dies kann damit erklärt werden, daß durch die hohen Temperaturen beim Faserziehen und durch die starke plastische Verformung des Quarzglases strukturelle Fehlstellen, beispielsweise freie Bindungen von Silizium entstehen, die durch den vorhandenen Wasserstoff unter Bildung von Si-H-Bindungen abgesättigt werden. Der Mechanismus läßt sich schematisch anhand folgender Formel darstellen:

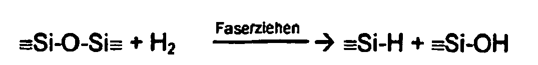

Die Absättigung freier, beim Faserziehen entstehender Bindungen durch vorhandenen Wasserstoff führt zu einer hohen Precursor-Konzentration (Si-H-Bindungen) im Faserkern. In der Publikation von J.E. Shelby, "Molecular diffusion and solubility of hydrogen isotopes in vitreous silica", J. Appl. Physics Vol. 48 (1977), No. 8, Seite 3387 ff, ist beschrieben, daß sich in wasserstoffhaltigem Quarzglas bei hohen Temperaturen Si-H-Bindungen bilden können. Si-H-Bindungen absorbieren zwar im relevanten UV-Wellenlängenbereich selbst nicht; die Bindungen sind jedoch relativ schwach und können bei anschließender Bestrahlung mit kurzwelligem UV-Licht leicht (in einem sogenannten "Ein-Photonen-Prozeß") unter Bildung absorbierender E'-Zentren aufbrechen. Dieser Vorgang ist in "Comparison of the influence of the fictive and the annealing temperature on the UV-transmission properties of synthetic fused silica" von V. Uₕₗ et al. in Appl. Phys. A, 65 (1997), Seiten 457 - 462, näher beschrieben. Da E'-Zentren im UV-Wellenlängenbereich absorbieren, wirkt sich dieser Umwandlungsmechanismus, der in der folgenden Formel schematisch dargestelt ist, auf die Strahlenbeständigkeit der Faser negativ aus.

≡Si-H + hν → ≡Si* + H (E'-Zentrum)

Diesen Nachteil zeigt eine optische Faser, die aus einer Vorform gemäß der Erfindung gezogen worden ist, jedoch nicht. Hierzu wird der Wasserstoffgehalt des Kernglases vor der Heißverformung beim Faserziehen auf einen Wert unterhalb von 1x10¹⁸ Moleküle/cm³ eingestellt. Es hat sich gezeigt, daß in diesem Fall die Precursor-Konzentration im Faserkern nach dem Faserziehen deutlich niedriger ist. Offensichtlich wird aufgrund des geringen Wasserstoffgehaltes die Bildung von Si-H-Bindungen beim Faserziehen unterdrückt. Das Schädigungsverhalten einer derartigen optischen Faser gegenüber energiereicher UV-Strahlung ist durch einen deutlich langsameren anfänglichen Anstieg der induzierten Absorption gekennzeichnet. Dies kann auf die geringe Precursor-Konzentration im Faserkern zurückgeführt werden.

Das Quarzglas zur Verwendung als Kernglas wird durch "Direkt-Verglasung" hergestellt. Fasern aus Vorformen, deren Kerngläser nach dem "Soot-Verfahren" oder durch "PlasmaVerfahren" hergestellt wurden, zeigten im UV-Wellenlängenbereich um 265 nm eine sogenannte "Ziehbande", die auch dann auftrat, wenn das Kernglas ansonsten dem Kernglas gemäß der Erfindung entsprach. Dies könnte mit den spezifischen Herstellungsbedingungen zusammenhängen.

Die Ermittlung des Wasserstoffgehalts erfolgt analog zu derjenigen, wie sie oben zum erfindungsgemäßen Verfahren beschrieben ist.

Ein besonders günstiges Schädigungsverhalten zeigt eine optische Faser, die aus einer Vorform gezogen wird, bei der ein Kernglas aus Quarzglas eingesetzt wird, das einen Wasserstoffgehalt von maximal 1x10¹⁷ Molekülen/cm³ aufweist.

Als vorteilhaft hat es sich erwiesen, wenn das als Kernglas zu verwendende Quarzglas einen Gehalt an Hydroxylgruppen von mindestens 100 Gew.-ppm aufweist. Hydroxylgruppen verbessern die Strahlenbeständigkeit des Kemglases. Die Ermittlung des Hydroxylgruppen-Gehalts der Vorform erfolgt analog zur oben erläuterten Ermittlung des Hydroxylgruppen-Gehalts im Kernglas.

Ein bevorzugt als Kernglas einzusetzendes Quarzglas weist einen Wasserstoffgehalt von mindestens 2x10¹⁵ Molekülen/cm³ auf. Aus einer Vorform mit einem Kernglas, bei dem der Wasserstoffgehalt unterhalb dieses Wertes eingestellt ist, wird eine optische Faser erhalten, die bei ca. 265 nm eine Absorptionsbande aufweist, die sich unter UV-Bestrahlung noch stärker ausprägt. Diese Absorptionsbande deutet auf NBOH-Zentren hin. Daraus ist zu schließen, daß der Wasserstoffgehalt des Quarzglases im Hinblick auf das Schädigungsverhalten gegenüber UV-Strahlung ein Optimum aufweist, das zwischen 1x10¹⁸ Molekülen/cm³ und 2x10¹⁵ Molekülen/cm³, vorzugsweise zwischen 1x10¹⁷ Molekülen/cm³ und 2x10¹⁵ Molekülen/cm³ liegt. Eine mögliche Erklärung dafür ist, daß es eines gewissen Gehaltes an Wasserstoff im Kernglas der Vorform bedarf, um beim Faserziehen die Ausbildung von NBOH-Zentren und/oder Vorläufer-Defekten für NBOH-Zentren zu vermeiden. Das beschriebene Schädigungsverhalten der Faser macht sich lediglich bei einer Übertragung von UV-Strahlung einer Wellenlänge ungünstig bemerkbar, die im Bereich der Absorptionsbande liegt (beispielsweise 248 nm, jedoch nicht bei 193 nm). Im übrigen kann dieser nachteilige Effekt eines geringen Wasserstoffgehaltes durch eine zusätzliche Maßnahme kompensiert werden, wie dies weiter oben im Zusammenhang mit dem Verfahren zur Herstellung einer optischen Faser näher erläutert ist.

Nachfolgend wird die Erfindung anhand von Ausführungsbeispielen und einer Zeichnung näher erläutert. In der Zeichnung zeigen im einzelnen
- **Figur 1**: ein Profil der örtlichen Verteilung von molekularem Wasserstoff über den radialen Querschnitt eines Kemstabes einer Vorform, vor und nach einer Wasserstoff- Reduktionsbehandlung,
- **Figur 2**: ein charakteristisches Schädigungsspektrum zweier erfindungsgemäß hergestellter optischer Fasern, im Vergleich mit einer Standardfaser, jeweils nach Bestrahlung mit einem ArF-Laser,
- **Figur 3**: ein charakteristisches Schädigungsspektrum zweier erfindungsgemäßer optischer Fasern im Vergleich mit einer Standardfaser, jeweils nach Beladung mit Wasserstoff und Bestrahlung mit einem ArF-Laser,
- **Figur 4**: ein charakteristisches Langzeitschädigungsverhalten einer erfindungsgemäßen optischen Faser im Vergleich mit einer Standardfaser, jeweils nach Bestrahlung mit einem ArF-Laser,
- **Figur 5**: ein charakteristisches Langzeitschädigungsverhalten einer erfindungsgemäßen optischen Faser im Vergleich mit einer Standardfaser, jeweils nach Beladung mit Wasserstoff und Bestrahlung mit einem ArF-Laser,
- **Figur 6**: ein charakteristisches Langzeitschädigungsverhalten einer erfindungsgemäßen optischen Faser im Vergleich mit einer Standardfaser, jeweils nach Beladung mit Wasserstoff und Bestrahlung mit einem KrF-Laser,
- **Figur 7**: ein charakteristisches Schädigungsspektrum einer erfindungsgemäßen optischen Fasern im Vergleich mit einer Standardfaser, jeweils nach Bestrahlung mit einer Deuterium Lampe, und
- **Figur 8**: ein charakteristisches Schädigungsspektrum einer erfindungsgemäßen, mit Wasserstoff beladenen optischen Faser, im Vergleich mit einer wasserstoffbeladenen Standardfaser, nach Bestrahlung mit einer Deuterium Lampe.

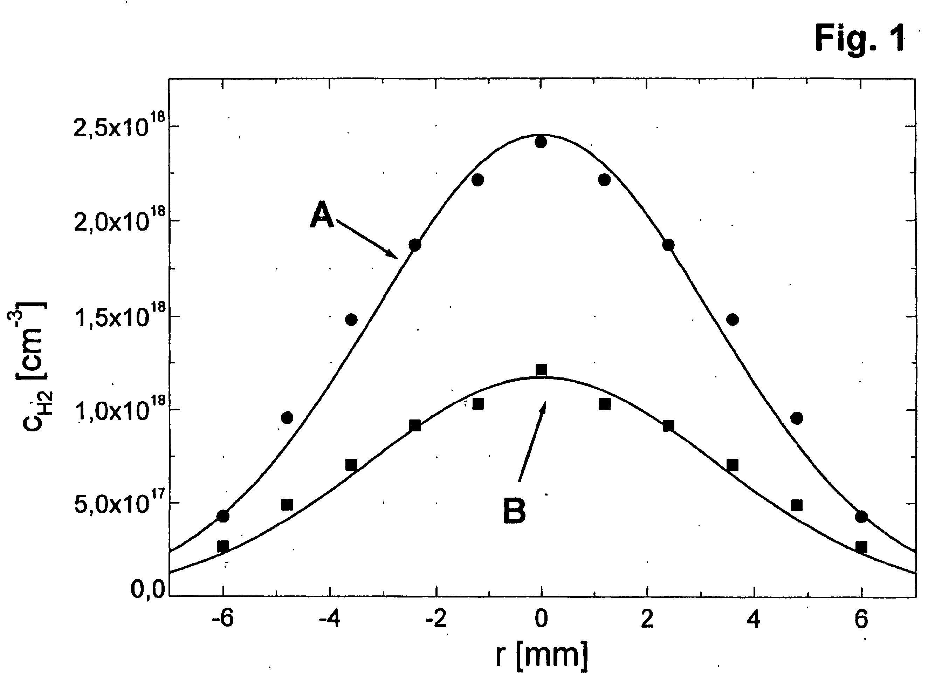

Bei der in **Figur 1** dargestellten, örtlichen Verteilung des Wasserstoffs über den Querschnitt eines Kernstabes einer Vorform ist auf der x-Achse der Abstand r von der Mittelachse des Kemstabes aufgetragen, und auf der y-Achse der absolute Wasserstoffgehalt c_{H2} in der Einheit Moleküle/cm³. Die Vorform hat einen Außendurchmesser von 15 mm. Das Verhältnis von Außendurchmesser zu Kemdurchmesser beträgt 1,1. Die Kurve A zeigt die radiale Wasserstoffverteilung unmittelbar nach der Herstellung der Vorform durch Ausziehen einer plasmabeschichteten Muttervorform deren Kemstab durch Flammenhydrolyse von SiCl₄ nach dem DQ-Verfahren gefertigt wurde, und Kurve B zeigt die Wasserstoffverteilung über die selbe Vorform nach einem 6-stündigen Tempern in wassestofffreier Atmosphäre, Normaldruck, und bei einer Temperatur von 800 °C. Daraus ist ersichtlich, daß nach dieser Wasserstoff-Reduktionsbehandlung ein maximaler Wasserstoffgehalt von etwas mehr als 1 x 10¹⁸ Moleküle/cm³ in der Mitte des Kemstabes gemessen wird. Um den Grenzgehalt an Wasserstoff im Sinne dieser Erfindung zu erreichen, der bei 1 x 10¹⁸ Moleküle/cm³ liegt, wäre bei diesem Beispiel somit noch ein geringfügig längeres Tempem erforderlich gewesen.

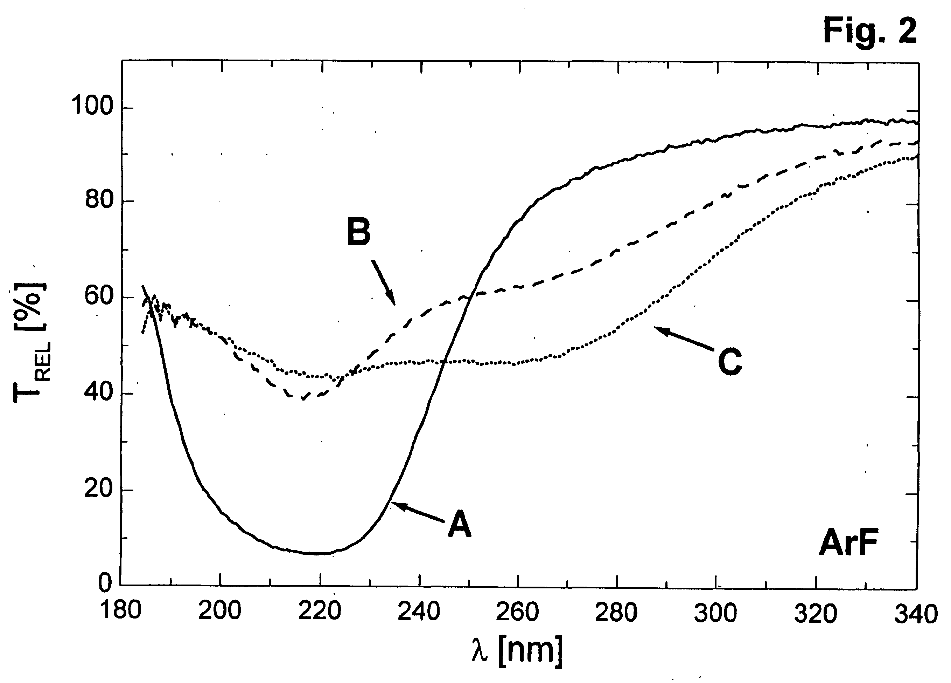

Im Diagramm gemäß **Figur 2** sind die Schädigungsspektren (Kurven A, B und C) unterschiedlicher optischer Fasern dargestellt. Die Fasern wurden unter jeweils gleichen Bedingungen aus einer Vorform mit einem Durchmesser von 15 mm gezogen, wie sie anhand Figur 1 näher beschrieben ist. Die daraus erhaltenen Fasern bestehen aus einem undotierten Kern aus synthetischem Quarzglas mit einem Kemdurchmesser von 200 µm, und einem Mantel aus fluordotiertem synthetischem Quarzglas. Die Meßlänge der Fasern beträgt jeweils 1 m.

Die x-Achse des Diagramms beschreibt hier die Meß-Weiteniänge in der Einheit nm, die y-Achse die relative Transmission T_{REL} der entsprechenden Faser in Prozent (bezogen auf den Anfangswert der Transmission). Die Schädigungsspektren werden unmittelbar nach der Bestrahlung mit einem gepulsten ArF-Laser (193 nm) spektroskopisch aufgenommen. Die verwendeten Bestrahlungsparameter sind: Energiedichte = 50 mJ/cm², Repetitionsrate = 10 Hz und Pulslänge = 15 ns.

Kurve A zeigt das Schädigungsverhalten einer Standardfaser (Faser A). Diese wurde aus einer unbehandelten Standard-Vorform erhalten. Der Wasserstoffgehalt in der Zentralachse des Kemglases der Standard-Vorform lag vor dem Faserziehen bei etwa 2x10¹⁸ Moleküle/cm³. Die Kurven B und C zeigen Schädigungsverhalten von optischen Fasern, die aus Vorformen gezogen wurden, die vorher jeweils bei 800°C und Normaldruck getempert worden waren. Bei der Faser gemäß Kurve B betrug die Temperdauer 24 Stunden (Faser B), bei der Faser nach Kurve C 120 Stunden (Faser C). Bei der Vorform aus der Faser B erhalten wurde, lag der Wasser stoffgehalt in der Zentralachse des Kemglases lag nach dem Tempem und vor dem Faserziehen bei etwa 1x10¹⁷ Molekülen/cm³. Im Kernglas der Vorform für Faser C war nach dem Tempem mit den üblichen Methoden kein Wasserstoff mehr nachweisbar.

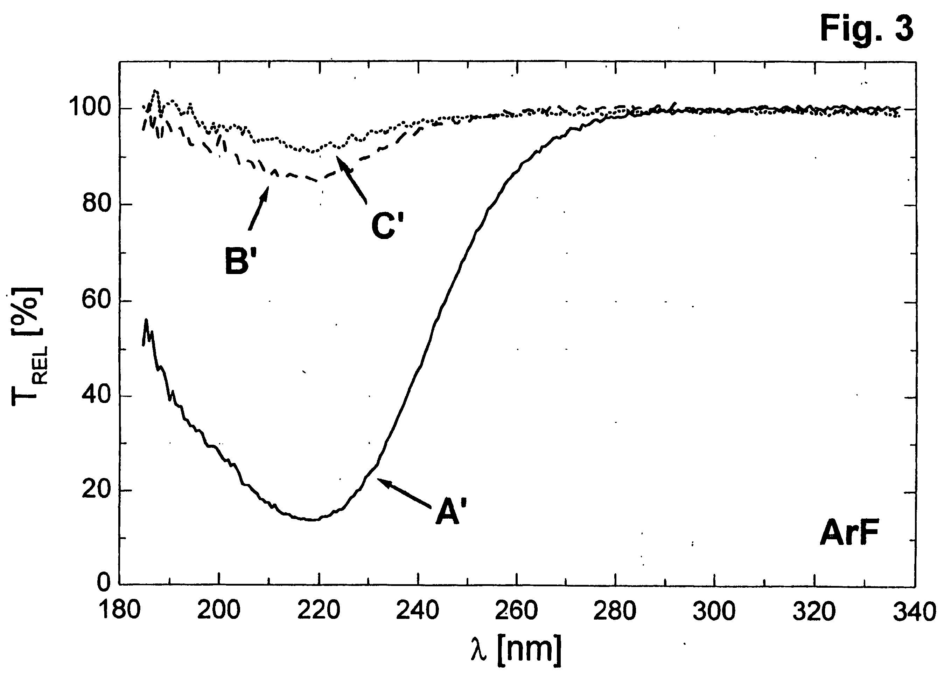

Das Schädigungsspektrum der Faser A zeigt deutlich die charakteristische starke Absorption bei einer Wellenlänge um 215 nm, die auf eine Bildung von E'-Zentren durch die UV-Bestrahlung zurückzuführen ist. Diese Schädigung wird in den erfindungsgemäß hergestellten Fasern (B und C) merklich unterdrückt. Darüberhinaus wird deutlich, daß mit abnehmendem Wasserstoffgehalt des Kemglases (zunehmende Temperzeit der Vorform) zwar einerseits die Bildung von E'-Zentren unterdrückt wird, sich jedoch andererseits nach UV-Bestrahlung eine Absorptionsbande um 265 nm bildet, die auf die Entstehung von NBOH-Zentren zurückzuführen ist. Für die Übertragung von UV-Strahlung einer Wellenlänge um 200 nm, wie beispielsweise der Übertragung von UV-Strahlung eines ArF-Lasers (193 nm), ist demnach eine erfindungsgemäß hergestellte Faser (Fasern B und C) der Standardfaser (Faser A) deutlich überlegen, da die laserinduzierte Zusatzdämpfung bei der Wellenlänge von 193 nm wesentlich geringer ausfällt. Aufgrund der induzierten Absorption um 265 nm, die bei den Fasern aus getemperten Vorformen beobachtet wurde, ist die Standardfaser für eine Übertragung bei 248 nm den Fasern B und C hingegen scheinbar überlegen. Dieses Ergebnis wird jedoch durch die nachfolgend anhand von Figur 3 erläuterten Schädigungsspektren relativiert.

Dem Diagramm gemäß Figur 3 liegt das gleiche Bestrahlungsexperiment zugrunde, wie in Figur 2. Es sind Schädigungsspektren A' B' und C' für optische Fasern dargestellt, deren Geometrie und Herstellung derjenigen der anhand Figur 2 erläuterten Fasern A, B bzw. C entspricht. Zusätzlich dazu wurden die optischen Fasern A' B' und C' jedoch nach dem Ziehprozeß mit Wasserstoff beladen. Dies erfolgte jeweils bei 80°C über 10 Tage unter einem Druck von 115 bar in Wasserstoffatmosphäre.

Die Schädigungsspektren nach Figur 3 zeigen, daß die Wasserstoffbeladung bei der Standardfaser (Kurve A') auf das Schädigungsverhalten im Bereich um 215 nm keinen wesentlichen Effekt hat. Die Standardfaser zeigt in diesem Bereich weiterhin eine starke induzierte Absorption, was auf die Entstehung von E'-Zentren zurückzuführen ist. Demgegenüber zeigen die erfindungsgemäß hergestellten Fasern B' und C' (Kurve B': 24 Stunden getemperte Vorform, Kurve C': 120 Stunden getemperte Vorform) nach der Beladung mit Wasserstoff eine deutliche Verbesserung in ihrem Schädigungsverhalten gegenüber 193 nm-Strahlung. Über das gesamte UV-Spektrum solarisieren die Fasern B' und C' kaum noch, insbesondere taucht nach der Wasserstoffbeladung die Absorptionsbande um 265 nm nicht mehr auf.

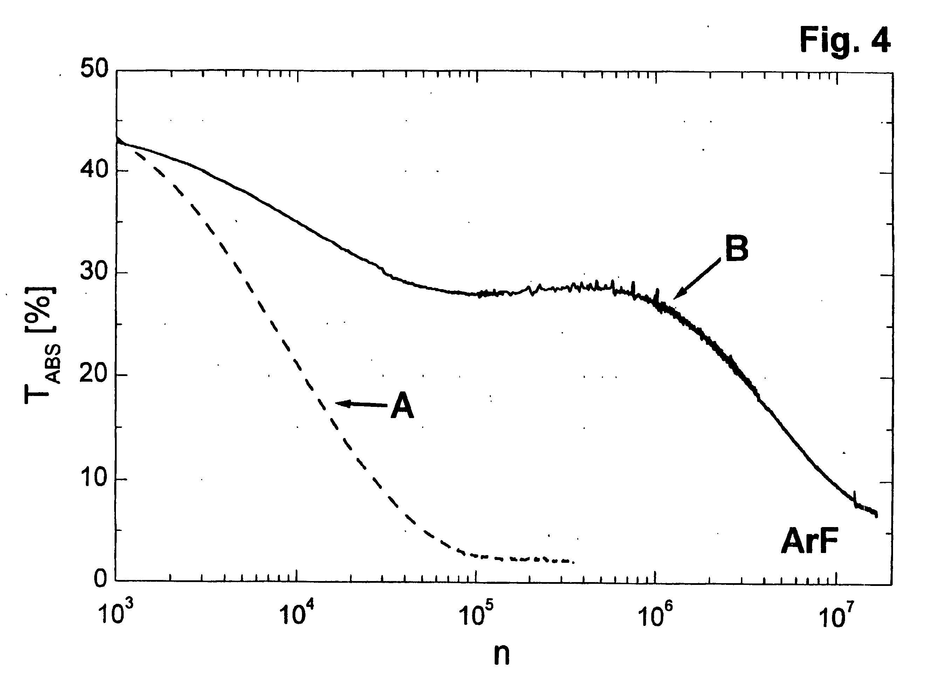

Besonders deutlich wird der Vorteil der erfindungsgemäß hergestellten Faser bei einer Langzeitbestrahlung mit einem ArF-Laser, deren Meßergebnis im Diagramm nach Figur 4 dargestellt ist. Die x-Achse stellt die Anzahl n der Laserpulse, die y-Achse die absolute Transmission T_{ABS} der untersuchten Faser in Prozent (ausgekoppelte Strahlungsleistung bezogen auf die eingekoppelte Strahlungsleistung) dar.

Dargestellt sind die Schädigungsverläufe (Kurve A und Kurve B) zweier optischer Fasern A und B während der Bestrahlung mit UV-Strahlung einer Wellenlänge von 193 nm. Die Meßwellenlänge beträgt ebenfalls 193 nm. Die Bestrahlung erfolgt hier mit einer Energiedichte von 5 mJ/cm², einer Repetitionsrate von 400 Hz und einer Pulslänge von 15 ns.

Geometrie und Herstellung der Fasern A und B stimmen mit derjenigen der anhand Figur 2 erläuterten Fasern A bzw. B überein. Die bestrahlten Fasern A und B waren jeweils 1 Meter lang und hatten einen Kemdurchmesser von 200 µm.

Figur 4 zeigt, daß die Standardfaser bei den beschriebenen Bestrahlungsparametern bereits nach 10⁵ Laserpulsen so stark geschädigt ist, daß die Transmission unter 3 % absinkt (Kurve A). Die erfindungsgemäß hergestellte Faser weist jedoch selbst nach 10⁶ Pulsen noch deutlich mehr als 25 % Transmission auf (Kurve B).

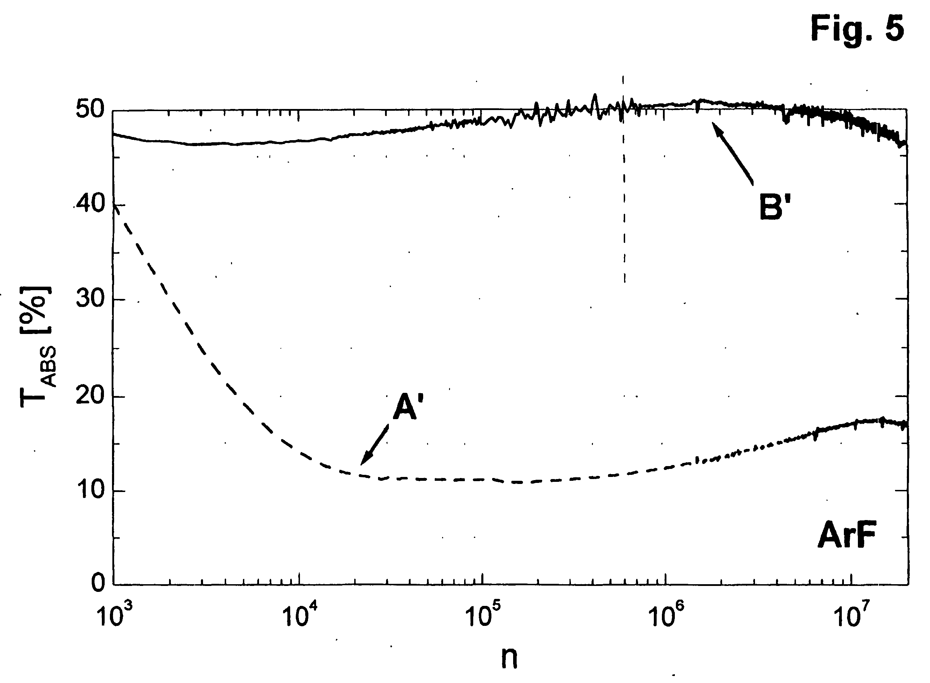

Dem Diagramm gemäß Figur 5 liegt das gleiche Bestrahlungsexperiment zugrunde, wie in Figur 4. Es sind Schädigungsverläufe A' und B' für optische Fasern dargestellt, deren Geometrie und Herstellung derjenigen der anhand Figur 3 erläuterten Fasern A' bzw. B' entspricht, das bedeutet, die Fasern A' und B' wurden nach dem Ziehprozeß mit Wasserstoff beladen. (Beladungsparameter anhand Figur 3 erläutert).

Die wasserstoffbeladene Standardfaser (Kurve A') wird bereits während der ersten 10⁴ Laserpulse sehr stark geschädigt, die absolute Transmission der Standardfaser fällt dabei unter 20 % und bleibt auch nach langen Bestrahlungsdauem (hohe Pulszahlen) unterhalb von diesem Wert. Die erfindungsgemäß hergestellte, und nachträglich wasserstoffbeladene Faser (Kurve B') wird dahingegen über einen Bestrahlungszeitraum von 2x10⁷ Lasepulsen nicht geschädigt.

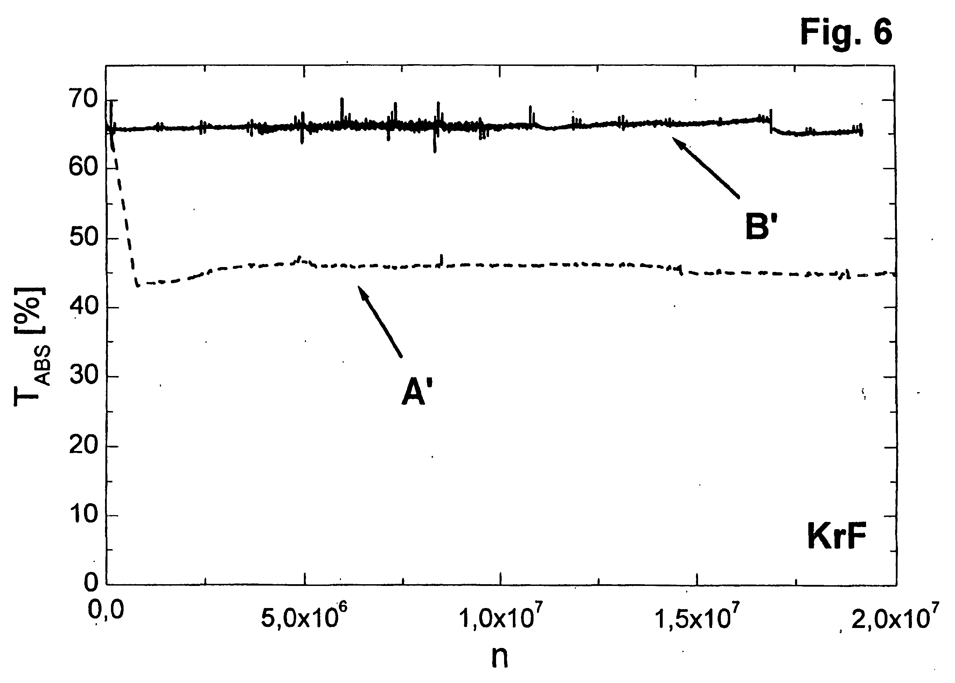

Den Meßergebnissen nach Figur 6 liegt das gleiche Experiment zugrunde wie bei Figur 5, mit der Ausnahme, daß die Bestrahlung hier mit einem KrF-Excimerlaser mit einer Bestrahlungswellenlänge von 248 nm erfolgte, wobei die Energiedichte 5 mJ/cm², die Repetitionsrate 500 Hz und die Pulslänge 15 ns betrug. Für das Experiment wurden die gleichen Fasern verwendet wie in Figur 5. Da bei der gewählten Wellenlänge die Grunddämpfung jedoch niedriger ist als bei 193 nm, wurde die Faserlänge auf 3 Meter festgelegt.

Die absolute Transmission T_{ABS} der mit Wasserstoff beladenen Standardfaser A' fällt innerhalb der ersten 10⁶ Pulse rapide von ca. 65% auf ca. 45% ab und bleibt dann bis zu einer Pulszahl von 2x10⁷ Laserpulsen auf diesem Niveau. Die Höhe dieses Plateaus hängt vermutlich von der Konzentration der Precursor-Zentren in der Faser ab. Dahingegen wird die erfindungsgemäße, wasserstoffbeladene Faser B' im Bestrahlungszeitraum überhaupt nicht geschädigt.

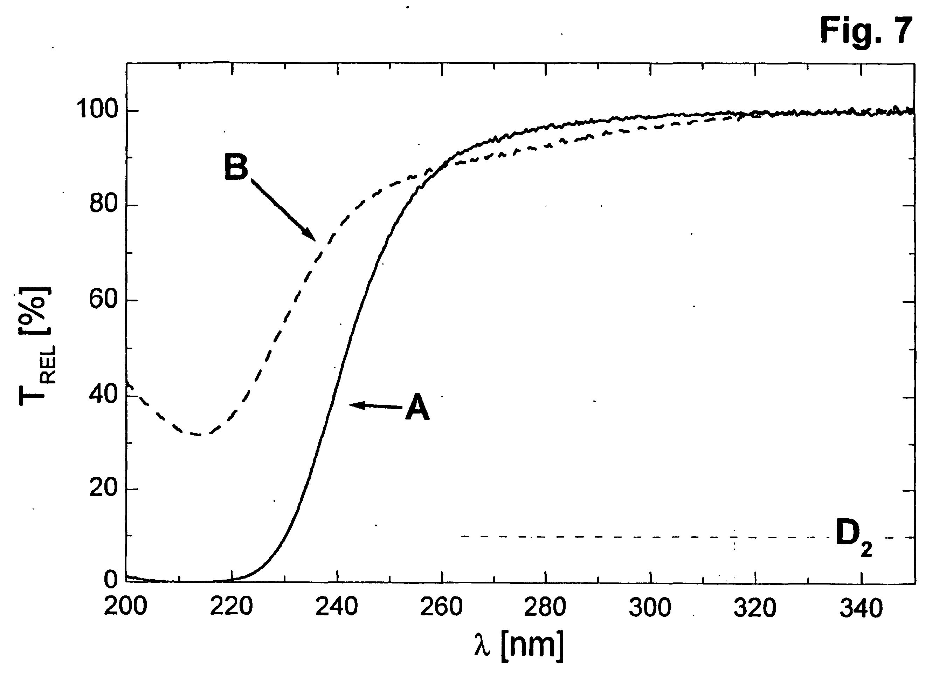

Dem in **Figur 7** dargestellten Diagramm liegt ein ähnliches Experiment zugrunde, wie dem Diagrammm nach Figur 2. Das Diagramm nach Figur 7 zeigt zwei Schädigungsspektren A und B, die an Fasern A bzw. B nach Bestrahlung mit einer Deuteriumlampe gemessen wurden. Herstellung und Geometrie der Fasern A und B stimmen (bis auf ihre Länge) mit derjenigen der Fasern A bzw. B überein, wie sie anhand Figur 2 beschrieben sind (im Experiment nach Figur 6 haben die Fasern A und B eine Länge von 2 m).

Die x-Achse entspricht der UV-Wellenlänge in nm, die y-Achse der relativen Transmission der Faser in Prozent (bezogen auf den Anfangswert der Transmission). Bei diesem Experiment werden jeweils die Fasern A, B zwei Stunden lang mit einer leistungsstarken Deuteriumlampe bestrahlt, deren spektrale Leistungsdichte bei der Wellenlänge von 215 nm 70 nW/nm beträgt.

Nach der genannten Bestrahlungszeit ist die Standardfaser (Kurve A) so stark geschädigt, daß die Transmission bei 215 nm (E'-Zentrum) auf 0% abgefallen ist. Die erfindungsgemäß hergestellte Faser (Kurve B) wird dagegen sehr viel weniger geschädigt; die relative Transmission liegt nach der Bestrahlungszeit von 2 Stunden immer noch über 30%.

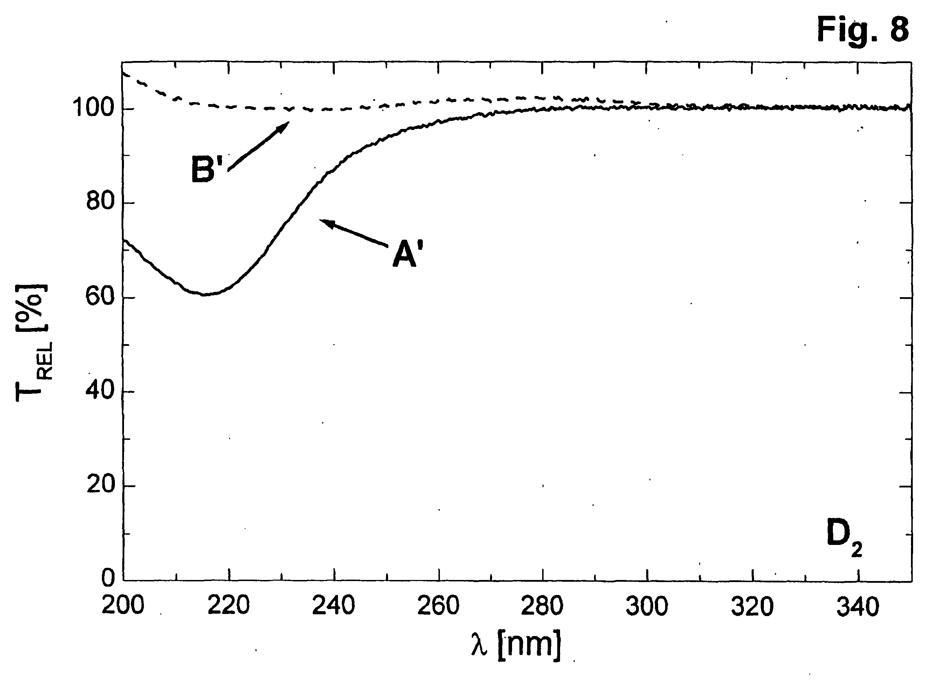

In Figur 8 liegt das gleiche Bestrahlungsexperiment mittels Deuteriumlampe zugrunde, wie es anhand Figur 7 erläutert ist. Hierfür wurden die wasserstoffbeladenen Fasern A' und B' (Meßlänge 2 m) verwendet, wie sie anhand Figur 3 beschrieben sind.

Auch in diesem Fall wird die wasserstoffbeladene Standardfaser (Kurve A') nach 2 Stunden Bestrahlungszeit bei der Wellenlänge von 215 nm stark geschädigt. Die erfindungsgemäß hergestellte, wasserstoffbeiadene Faser (Kurve B') solarisiert jedoch bei gleichen Versuchsbedingungen nicht.

Im folgenden wird die Herstellung eines erfindungsgemäßen Kernglases einer Vorform für eine optische Faser, bzw. einer erfindungsgemäßen Faser anhand eines Beispiels näher erläutert:

Ein scheibenförmiges Substrat wird so angeordnet, daß es mit einer seiner Flachseiten senkrecht nach unten weist. Unterhalb des Substrates ist ein Abscheidebrenner angeordnet, der einer Mitteldüse aufweist, die von vier Ringdüsen koaxial umgeben ist. Der Abscheidebrenner ist auf das Substrat gerichtet, das um seine Mittelachse rotiert. Der Mitteldüse des Abscheidebrenners wird mittels eines Trägergases (Stickstoff) Siliziumtetrachlorid zugeführt, den anderen Düsen (in der Reihenfolge von innen nach außen) ein Trenngas (Stickstoff), Sauerstoff und ganz außen Wasserstoff. Sauerstoff und Wasserstoff reagieren unter Bildung einer Knallgasflamme miteinander, in der das aus der Mitteldüse ausströmende Siliziumtetrachlorid hydrolisiert und in Form von feinteiligem, synthetischem SiO₂ auf dem Substrat abgeschieden wird. Das auf dem Substrat abgeschiedene SiO₂ wird unmittelbar durch die Hitze der Knallgasflamme unter Bildung eines stabförmigen Quarzglas-Rohlings verglast. Der so erhaltene Rohling besteht aus synthetischem Quarzglas, das einen OH-Gehalt von ca. 700 Gew.-ppm und einen relativ hohen Wasserstoffgehalt von mehr als 2x10¹⁸ Molekülen/cm³ aufweist.

### 1.Verfahrensvariante zur Herstellung eines erfindungsgemäßen Kernglases

In einer ersten Ausführungsvariante wird aus dem Rohling ein Kernglas im Sinne dieser Erfindung hergestellt, indem der Rohling zu einem Rundstab mit einem Durchmesser von 15 mm langgezogen, und anschließend einer Wasserstoff-Reduktionsbehandlung unterzogen wird. Hierzu wird der Rundstab unter Vakuum bei 800°C über eine Dauer von 24 h getempert. Danach zeigt der Rundstab über seinen reinen Querschnitt gesehen ein Wasserstoff-Konzentrationsprofil, ähnlich dem in Figur 1 dargestellten, wobei der maximale Wasserstoffgehalt im Bereich der Längsachse des Rundstabes bei einem Wert von ca. 1x10¹⁷ Molekülen/cm³ liegt. Der OH-Gehalt des Kemglases liegt danach weiterhin bei ca. 700 Gew.-ppm

Zur Herstellung einer Vorform wird das so hergestellte Kernglas durch Außenabscheidung (Plasmaverfahren oder OVD-Verfahren) oder durch die Stab-in-Rohr-Technik mit einem optischen Mantel versehen, wie dies nachfolgend näher beschrieben wird.

### 2.Verfahrensvariante zur Herstellung von Kernglases und Faser gemäß der Erfindung

In einer zweiten Ausführungsvariante wird aus dem oben beschriebenen Rohling ein Kernglas im Sinne dieser Erfindung hergestellt, indem aus dem Rohling durch Abziehen ein Kemstab hergestellt wird, auf dessen Zylindermantelfläche anschließend in einem Plasma-Beschichtungsverfahren eine mit Fluor dotierte SiO₂-Mantelglasschicht abgeschieden wird. Das entsprechende Abscheideverfahren ist in der US-PS 4,162,908 beschrieben. Der Fluorgehalt des Mantelglases wird dabei auf ca. 5 Gew.-%, das Verhältnis Außendurchmesser zu Kernstabdurchmesser auf 1,1 eingestellt.

Zur Reduzierung des Wasserstoffgehaltes im Kemstab wird die erhaltene Vorform bei 800°C in einem Ofen unter Luftatmosphäre über 24 Stunden getempert. Der Wasserstoffgehalt im Kernglas der Vorform wird durch den genannten Temperschritt von 2x10¹⁸ Moleküle/cm³ auf 1x10¹⁷ Moleküle/cm³ abgesenkt. Der OH-Gehalt des wasserstoffreduzierten Kernglases liegt danach weiterhin bei ca. 700 Gew.-ppm.

Zur Herstellung einer optischen Faser wird die nach der 1. oder nach der 2. Verfahrensvariante erhaltene Vorform, die das wasserstoffreduzierte Kernglas enthält, zu einer Lichtleitfaser mit einem Außendurchmesser von 220 µm langgezogen. Die Lichtleitfaser wird während des Ziehens mit einem handelsüblichen Acrylatcoating beschichtet.

Nach dem Ziehen wird die Lichleitfaser einer Wasserstoffbeladung unterzogen. Diese erfolgt, indem die Lichtleitfaser in einem Autoklaven bei 80°C und 150 bar einer Wasserstoffatmosphäre über einen Zeitraum von 10 Tagen ausgesetzt wird. Der Wasserstoffgehalt des Faserkerns liegt nach der Wasserstoffbeladung bei etwa 5x10¹⁹ Molekülen/cm³.

## Patentansprüche

1. Vorform für eine optische Faser, insbesondere für eine optische Faser für die Übertragung von UV-Strahlung, mit einem Kernglas aus synthetischem Quarzglas, erhalten durch Flammenhydrolyse einer Siliziumverbindung, Abscheiden von feinkörnigem SiO₂ auf einem Substrat unter direktem Verglasen und Bildung des synthetischen Quarzglases, das von einem Mantelglas umhüllt ist, **dadurch gekennzeichnet, daß** das Kernglas einen Wasserstoffgehalt von weniger als 1x10¹⁸ Molekülen/cm³ aufweist.

2. Vorform nach Anspruch 1, **dadurch gekennzeichnet, daß** das Kernglas einen Wasserstoffgehalt von maximal 1x10¹⁷ Molekülen/cm³ aufweist.

3. Vorform nach Anspruch 1 oder 2, **dadurch gekennzeichnet, daß** das Kernglas einen Gehalt an Hydroxylgruppen von mindestens 100 Gew.-ppm aufweist.

4. Vorform nach einem der Ansprüche 1 bis 3, **dadurch gekennzeichnet, daß** das Kernglas einen Wasserstoffgehalt von mindestens 2x10¹⁵ Molekülen/cm³ aufweist.

5. Vorform nach einem der Ansprüche 1 bis 4, **dadurch gekennzeichnet, daß** das Mantelglas einen Wasserstoffgehalt von weniger als 1x10¹⁸ Molekülen/cm³, vorzugsweise von weniger als 1x10¹⁷ Molekülen/cm³ aufweist.

6. Verfahren zur Herstellung eines Kernglases einer Vorform für eine optische Faser, insbesondere für eine optische Faser für die Übertragung von UV-Strahlung, umfassend die Herstellung von synthetischem Quarzglas durch Flammenhydrolyse einer Siliziumverbindung, Abscheiden von feinkörnigem SiO₂ auf einem Substrat unter direktem Verglasen und Bildung des synthetischen Quarzglases, **dadurch gekennzeichnet, daß** der Wasserstoffgehalt des Quarzglases auf einen Wert unterhalb von 1x10¹⁸ Molekülen/ cm³ eingestellt wird.

7. Verfahren nach Anspruch 6, **dadurch gekennzeichnet, daß** der Wasserstoffgehalt des Quarzglases auf einen Wert von maximal 1x10¹⁷ Molekülen/cm³ eingestellt wird.

8. Verfahren nach Anspruch 6 oder 7, **dadurch gekennzeichnet, daß** der Hydroxylgruppen-Gehalt des Quarzglases auf mindestens 100 Gew.-ppm eingestellt wird.

9. Verfahren nach einem der Ansprüche 6 bis 8, **dadurch gekennzeichnet, daß** der Wasserstoffgehalt des Quarzglases auf einen Wert von mindestens 2x10¹⁵ Molekülen/cm³ eingestellt wird.

10. Verfahren nach einem der Ansprüche 6 bis 9, **dadurch gekennzeichnet, daß** ein wasserstoffhaltiges Quarzglas erzeugt wird, und daß das Einstellen des Wasserstoffgehaltes eine Wasserstoff-Reduktionsbehandlung umfaßt, der das wasserstoffhaltige Quarzglas unter Bildung des synthetischen Quarzglases unterzogen wird.

11. Verfahren nach einem der Ansprüche 6 bis 10, **dadurch gekennzeichnet, daß** das Einstellen des Wasserstoff-Gehalts eine thermische Behandlung, eine Behandlung unter Vakuum, und/oder eine Behandlung des Quarzglases in einer chemisch reaktiven Atmosphäre umfaßt.

12. Verfahren nach Anspruch 11, **dadurch gekennzeichnet, daß** das Quarzglas bei einer Temperatur von mindestens 600 °C getempert wird.

13. Verfahren zur Herstellung einer optischen Faser, insbesondere einer optischen Faser für die Übertragung von UV-Strahlung, durch Ziehen aus einer Vorform, die ein Kernglas aus synthetischem Quarzglas umfaßt, das durch Flammenhydrolyse einer Siliziumverbindung, Abscheiden von feinkörnigem SiO₂ auf einem Substrat unter direktem Verglasen und Bildung des synthetischen Quarzglases gebildet wird, **dadurch gekennzeichnet, daß** das Kernglas vor dem Ziehen auf einen Wasserstoffgehalt von weniger als 1x10¹⁸ Molekülen/cm³ eingestellt wird.

14. Verfahren zur Herstellung einer optischen Faser nach Anspruch 13, **dadurch gekennzeichnet, daß** das Kernglas auf einen Wasserstoffgehalt von maximal 1x10¹⁷ Moleküle/cm³ eingestellt wird.

15. Verfahren nach Anspruch 13 oder 14, **dadurch gekennzeichnet, daß** das Kernglas auf einen Hydroxylgruppen-Gehalt von mindestens 100 Gew.-ppm eingestellt wird.

16. Verfahren nach einem der Ansprüche 13 bis 15, **dadurch gekennzeichnet, daß** das Kernglas auf einen Wasserstoffgehalt von mindestens 2x10¹⁵ Moleküle/cm³ eingestellt wird.

17. Verfahren nach einem der Ansprüche 13 bis 16, **dadurch gekennzeichnet, daß** ein wasserstoffhaltiges Quarzglas erzeugt wird, und daß das Einstellen des Wasserstoffgehaltes eine Wasserstoff-Reduktionsbehandlung umfaßt, der das wasserstoffhaltiges Quarzglas unter Bildung des Kernglases unterzogen wird.

18. Verfahren nach einem der Ansprüche 13 bis 17, **dadurch gekennzeichnet, daß** das Einstellen des Wasserstoff-Gehalts eine thermische Behandlung, eine Behandlung unter Vakuum, und/oder eine Behandlung des Kernglases in einer chemisch reaktiven Atmosphäre umfaßt.

19. Verfahren nach Anspruch 18, **dadurch gekennzeichnet, daß** das Kernglas bei einer Temperatur von mindestens 600 °C getempert wird.

20. Verfahren nach einem der Ansprüche 13 bis 19, **dadurch gekennzeichnet, daß** die Faser nach dem Ziehen aus der Vorform mit Wasserstoff beladen wird.

21. Verfahren nach Anspruch 20, **dadurch gekennzeichnet, daß** die Faser mit einem Faserkern ausgebildet wird, und daß durch die Wasserstoff-Beladung mindestens im Faserkern ein Wasserstoffgehalt von mindestens 1x10¹⁸ Moleküle/cm³ eingestellt wird.

22. Verwendung von synthetischem, durch Flammenhydrolyse einer Siliziumverbindung und Abscheiden von feinkörnigem SiO₂ auf einem Substrat unter direktem Verglasen gebildeten Quarzglas mit einem Wasserstoffgehalt von weniger als 1x10¹⁸ Molekülen/cm³ als Kernglas für die Herstellung einer Vorform für eine optische Faser für die Übertragung von UV-Strahlung.

23. Verwendung nach Anspruch 22, **dadurch gekennzeichnet, daß** das Quarzglas einen Wasserstoffgehalt von weniger als 1x10¹⁷ Molekülen/cm³ aufweist.

24. Verwendung nach Anspruch 22 oder 23, **dadurch gekennzeichnet, daß** das Quarzglas einen Gehalt an Hydroxylgruppen von mindestens 100 Gew.-ppm aufweist.

25. Verwendung nach einem der Ansprüche 22 bis 24, **dadurch gekennzeichnet, daß** das Quarzglas einen Wasserstoffgehalt von mindestens 2x10¹⁵ Molekülen/cm³ aufweist. -

## Claims

1. A preform for an optical fiber, particularly for an optical fiber for transmitting UV radiation, comprising a core glass of synthetic quartz glass obtained by flame hydrolysis of a silicon compound, deposition of fine-grained SiO₂ on a substrate with direct vitrification and formation of the synthetic quartz glass which is clad by a cladding glass, **characterized in that** the core glass has a hydrogen content of less than 1x10¹⁸ molecules/cm³.

2. The preform according to claim 1, **characterized in that** the core glass has a hydrogen content of not more than 1x10¹⁷ molecules/cm³.

3. The preform according to claim 1 or 2, **characterized in that** the core glass has a content of hydroxyl groups of at least 100 wt ppm.

4. The preform according to any one of claims 1 to 3, **characterized in that** the core glass has a hydrogen content of at least 2x10¹⁵ molecules/cm³.

5. The preform according to any one of claims 1 to 4, **characterized in that** the cladding glass has a hydrogen content of less than 1x10¹⁸ molecules/cm³, preferably of less than 1x10¹⁷ molecules/cm³.

6. A method for producing a core glass of a preform for an optical fiber, particularly for an optical fiber for transmitting UV radiation, comprising producing synthetic quartz glass by flame hydrolysis of a silicon compound, depositing fine-grained SiO₂ on a substrate with direct vitrification and formation of the synthetic quartz glass, **characterized in that** the hydrogen content of the quartz glass is set to a value below 1x10¹⁸ molecules/cm³.

7. The method according to claim 6, **characterized in that** the hydrogen content of the quartz glass is set to a value of not more than 1x10¹⁷ molecules/cm³.

8. The method according to claim 6 or 7, **characterized in that** the hydroxyl group content of the quartz glass is set to at least 100 wt ppm.

9. The method according to any one of claims 6 to 8, **characterized in that** the hydrogen content of the quartz glass is set to a value of at least 2x10¹⁵ molecules/cm³.

10. The method according to any one of claims 6 to 9, **characterized in that** a hydrogen-containing quartz glass is produced, and that the setting of the hydrogen content comprises a hydrogen reduction treatment to which the hydrogen-containing quartz glass is subjected with formation of the synthetic quartz glass.

11. The method according to any one of claims 6 to 10, **characterized in that** the setting of the hydrogen content comprises a thermal treatment, a treatment under vacuum, and/or a treatment of the quartz glass in a chemically reactive atmosphere.

12. The method according to claim 11, **characterized in that** the quartz glass is annealed at a temperature of at least 600°C.

13. A method for producing an optical fiber, particularly an optical fiber for transmitting UV radiation, by drawing from a preform including a core glass of synthetic quartz glass which is formed by flame hydrolysis of a silicon compound, deposition of fine-grained SiO₂ on a substrate with direct vitrification and formation of the synthetic quartz glass, **characterized in that** prior to drawing the core glass is set to a hydrogen content of less than 1x10¹⁸ molecules/cm³.

14. The method for producing an optical fiber according to claim 13, **characterized in that** the core glass is set to a hydrogen content of not more than 1x10¹⁷ molecules/cm³.

15. The method according to claim 13 or 14, **characterized in that** the core glass is set to a hydroxyl group content of at least 100 wt ppm.

16. The method according to any one of claims 13 to 15, **characterized in that** the core glass is set to a hydrogen content of at least 2x10¹⁵ molecules/cm³.

17. The method according to any one of claims 13 to 16, **characterized in that** a hydrogen-containing quartz glass is produced, and that the setting of the hydrogen content comprises a hydrogen reduction treatment to which the hydrogen-containing quartz glass is subjected with formation of the core glass.

18. The method according to any one of claims 13 to 17, **characterized in that** the setting of the hydrogen content comprises a thermal treatment, a treatment under vacuum, and/or a treatment of the core glass in a chemically reactive atmosphere.

19. The method according to claim 18, **characterized in that** the core glass is annealed at a temperature of at least 600°C.

20. The method according to any one of claims 13 to 19, **characterized in that** after drawing from the preform the fiber is loaded with hydrogen.

21. The method according to claim 20, **characterized in that** the fiber is formed with a fiber core, and that a hydrogen content of at least 1x10¹⁸ molecules/cm³ is set by hydrogen loading at least in the fiber core.

22. Use of synthetic quartz glass formed by flame hydrolysis of a silicon compound and deposition of fine-grained SiO₂ on a substrate with direct vitrification and having a hydrogen content of less than 1x10¹⁸ molecules/cm³ as the core glass for producing a preform for an optical fiber for transmitting UV radiation.

23. Use according to claim 22, **characterized in that** the quartz glass has a hydrogen content of less than 1x10¹⁷ molecules/cm³.

24. Use according to claim 22 or 23, **characterized in that** the quartz glass has a content of hydroxyl groups of at least 100 wt ppm.

25. Use according to any one of claims 22 to 24, **characterized in that** the quartz glass has a hydrogen content of at least 2x10¹⁵ molecules/cm³.

## Revendications

1. Préforme pour une fibre optique, en particulier pour une fibre optique pour la transmission de rayonnement UV avec un verre de coeur en verre de quartz synthétique, obtenu par hydrolyse à la flamme d'un composé de silicium, précipitation de SiO₂ à grains fins sur un substrat par vitrification directe et formation du verre de quartz synthétique qui est entouré par un verre de gaine, **caractérisée en ce que** le verre de coeur présente une teneur en hydrogène inférieure à 1 x 10¹⁸ molécules/cm³.

2. Préforme selon la revendication 1, **caractérisée en ce que** le verre de coeur présente une teneur en hydrogène inférieure à 1 x 10¹⁷ molécules/cm³.

3. Préforme selon la revendication 1 ou 2, **caractérisée en ce que** le verre de coeur présente une teneur en groupes hydroxyles d'au moins 100 ppm en poids.

4. Préforme selon l'une des revendications 1 à 3, **caractérisée** le verre de coeur présente une teneur en hydrogène d'au moins 2 x 10¹⁵ molécules/cm³.

5. Préforme selon l'une des revendications 1 à 4, **caractérisé en ce que** le verre de gaine présente une teneur en hydrogène inférieure à 1 x 10¹⁸ molécules/cm³, de préférence inférieure à 1 x 10¹⁷ molécules/cm³.

6. Procédé pour la fabrication d'un verre de coeur d'une préforme pour une fibre optique, en particulier pour une fibre optique pour la transmission de rayonnement UV, comprenant la fabrication de verre de quartz synthétique par hydrolyse à la flamme d'un composé d silicium, précipitation de SiO₂ à grains fins sur un substrat par vitrification directe et formation du verre de quartz synthétique, **caractérisé en ce que** le verre de coeur présente une teneur en hydrogène inférieure à 1 x 10¹⁸ molécules/cm³.

7. Procédé selon la revendication 6, **caractérisé en ce que** la teneur en hydrogène du verre de quartz est réglée à une valeur maximale de 1 x 10¹⁷ molécules/cm³.

8. Procédé selon la revendication 6 ou 7, **caractérisé en ce que** la teneur en groupes hydroxyles du verre de quartz est réglée à au moins 100 ppm en poids.

9. Procédé selon l'une des revendications 6 à 8, **caractérisé en ce que** la teneur en hydrogène du verre de quartz est réglée à une valeur minimale de 2 x 10¹⁵ molécules/cm³.

10. Procédé selon l'une des revendications 6 à 9, **caractérisé en ce qu'**il est produit un verre de quartz contenant de l'hydrogène et **en ce que** le réglage de la teneur en hydrogène comprend un traitement de réduction d'hydrogène, auquel est soumis le verre de quartz contenant de l'hydrogène en formant le verre de quartz synthétique.

11. Procédé selon l'une des revendications 6 à 10, **caractérisé en ce que** le réglage de la teneur en hydrogène comprend un traitement thermique, un traitement sous vide et/ou un traitement du verre de quartz dans une atmosphère chimiquement réactive.

12. Procédé selon la revendication 11, **caractérisé en ce que** le verre de quartz est trempé à une température d'au moins 600°C.

13. Procédé pour la fabrication d'une fibre optique, en particulier une fibre optique pour la transmission de rayonnement UV, par tirage d'une préforme qui comprend un verre de coeur en verre de quartz synthétique qui est formé par hydrolyse à la flamme d'un composé de silicium, précipitation de SiO₂ à grains fins sur un substrat par vitrification directe et formation du verre de quartz synthétique, **caractérisé en ce que** le verre de coeur est réglé avant le tirage à une teneur en hydrogène inférieure à 1 x 10¹⁸ molécules/cm³.

14. Procédé pour la fabrication d'une fibre optique selon la revendication 13, **caractérisé en ce que** le verre de coeur est réglé à une teneur d'hydrogène maximale de 1 x 10¹⁷ molécules/cm³.

15. Procédé selon la revendication 13 ou 14, **caractérisé en ce que** le verre de coeur est égal à une teneur en groupes hydroxyles d'au moins 100 pour cent en poids.

16. Procédé selon l'une des revendications 13 à 15, **caractérisé en ce que** le verre de coeur est réglé à une teneur d'hydrogène minimale de 2 x 10¹⁵ molécules/cm³.

17. Procédé selon l'une des revendications 13 à 16, **caractérisé en ce qu'**un verre de quarts contenant de l'hydrogène est produit et **en ce que** le réglage de la teneur en hydrogène comprend un traitement de réduction d'hydrogène auquel est soumis le verre de quartz contenant de l'hydrogène en formant le verre de coeur.

18. Procédé selon l'une des revendications 13 à 17, **caractérisé en ce que** le réglage de la teneur en hydrogène comprend un traitement thermique, un traitement sous vide et/ou un traitement du verre de coeur dans une atmosphère chimique réactive.

19. Procédé selon la revendication 18, **caractérisé en ce que** le verre de quartz est trempé à une température d'au moins 600°C.

20. Procédé selon l'une des revendications 13 à 19, **caractérisé en ce que** les fibres sont chargées d'hydrogène après le tirage hors de la préforme.

21. Procédé selon la revendication 20, **caractérisé en ce que** les fibres sont réalisées avec un coeur de fibres et **en ce que** par la charge d'hydrogène, il est réglé au moins dans le coeur de fibres une teneur en hydrogène d'au moins 1 x 10¹⁸ molécules/cm³.

22. Utilisation de verre de quartz synthétique formé par vitrification directe sur un substrat, par hydrolyse à la flamme d'un composé de silicium et précipitation de SiO² à grains fin, avec une teneur en hydrogène à 1 x 10¹⁸ molécules en tant que verre de quartz pour la fabrication d'une préforme pour une fibre optique pour la transmission de rayonnement UV.

23. Utilisation selon la revendication 22, **caractérisée en ce que** le verre de quartz présente une teneur en hydrogène inférieure à 1 x 10¹⁷ molécules/cm³.

24. Utilisation selon la revendication 22 ou 23, **caractérisée en ce que** le verre de quartz présente une teneur en groupes hydroxyles inférieure à 100 ppm en poids.

25. Utilisation selon la revendication 22, **caractérisée en ce que** le verre de quartz présente une teneur en hydrogène inférieure à 2 x 10¹⁵ molécules/cm³.
